(19) Europäisches Patentamt
European Patent Office
Office européen des brevets

(11) EP 4 001 317 A1

(12) EUROPEAN PATENT APPLICATION
published in accordance with Art. 153(4) EPC

(43) Date of publication:
25.05.2022 Bulletin 2022/21

(51) International Patent Classification (IPC):
C08F 6/22 (2006.01)       C08F 220/18 (2006.01)
C08L 33/04 (2006.01)      C08K 3/013 (2018.01)

(21) Application number: 20842946.4

(22) Date of filing: 05.06.2020

(52) Cooperative Patent Classification (CPC):
C08F 6/22; C08F 220/18; C08K 3/013; C08L 33/04

(86) International application number:
PCT/JP2020/022318

(87) International publication number:
WO 2021/014795 (28.01.2021 Gazette 2021/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.07.2019   JP 2019134140

(71) Applicant: Zeon Corporation
Tokyo 100-8246 (JP)

(72) Inventors:
• MASUDA, Hirofumi
Tokyo 100-8246 (JP)
• TSUNEKUNI, Nobuhiro
Kurashiki-shi, Okayama 713-8103 (JP)

(74) Representative: Hansen, Norbert
Maiwald Patentanwalts- und
Rechtsanwaltsgesellschaft mbH
Elisenhof
Elisenstraße 3
80335 München (DE)

(54) ACRYLIC RUBBER HAVING SUPERIOR WATER RESISTANCE

(57) An acrylic rubber including: a polymer composition of: 70 to 99.9% by weight of a bonding unit derived from at least one (meth) acrylic acid ester selected from (meth) acrylic acid alkyl ester and (meth) acrylic acid alkoxyalkyl ester; 0.1 to 10% by weight of a bonding unit derived from a monomer containing a reactive group; and 0 to 20% by weight of a bonding unit derived from other monomer, wherein ash content is 0.15% by weight or less, total amount of sodium and sulfur in the ash is 60% by weight or more, a ratio of sodium to sulfur by weight ratio is in the range of 0.5 to 2.5, ratio of Z-average molecular weight to weight average molecular weight is 1.3 or more, and weight average molecular weight is in the range of 1,000,000 to 5,000,000.

FIG.1

EP 4 001 317 A1

**Description**

[FIELD OF THE INVENTION]

The present invention relates to an acrylic rubber, a method for producing the same, a rubber composition and a rubber cross-linked product; and more specifically relates to an acrylic rubber excellent in water resistance, having strength properties and processability highly well-balanced, a method for producing the same, a rubber composition including the acrylic rubber, and a rubber cross-linked product obtained by cross-linking the same.

[BACKGROUND ART]

Acrylic rubber is a polymer mainly composed of acrylic acid ester and is generally known as rubber excellent in heat resistance, oil resistance, and ozone resistance, and is widely used in fields related to automobiles.

For example, Patent Document 1 (International Publication WO 2018/079783 Pamphlet) discloses a method in which, a monomer component comprising ethyl acrylate, n-butyl acrylate, and mono-n-butyl fumarate is emulsified using an emulsifier containing pure water, sodium lauryl sulfate and polyoxyethylene dodecyl ether, emulsion polymerization is performed in the presence of a polymerization initiator up to a polymerization conversion rate of 95% by weight to obtain an emulsion polymerization liquid; sodium sulfate is continuously added to the obtained emulsion polymerization liquid to produce hydrous crumbs; and subsequently, the produced hydrous crumbs are washed with industrial water 4 times, once with acidic water of pH3, and once with pure water, and then dried with a hot air dryer at 110°C for 1 hour, thereby to obtain an acrylic rubber excellent in water resistance (volume change after immersion in 80°C distilled water for 70 hours) with a small residual amount of the emulsifier and the coagulant. However, recently, an acrylic rubber has been required to have higher water resistance in severer environment, and moreover, an acrylic rubber excellent in strength properties and processability is required.

[CITATION LIST]

[PATENT LITERATURE]

[Patent Document 1] International Publication WO 2018/079783 Pamphlet

The present invention has been made considering the actual situation of the prior art, and the present invention is aimed to provide an acrylic rubber excellent in water resistance, having strength properties and processability highly well-balanced, a method for producing the same, a rubber composition including the acrylic rubber, and a rubber cross-linked product obtained by cross-linking the same.

[MEANS TO SOLVE THE PROBLEM]

As a result of diligent studies conducted by the present inventors in view of the above problems, the present inventors have found out that an acrylic rubber, comprising a specific monomer composition, wherein an ash content and an ash component ratio satisfy a specific condition and a molecular weight distribution and an weight average molecular weight in a high molecular weight region are within a specific range is highly excellent in water resistance, having strength properties and processability highly well-balanced, and that these properties can be further improved by controlling an amount of gel insoluble in a specific solvent of the above acrylic rubber within a specific range.

The present inventors have also found out that such an acrylic rubber can be easily produced by emulsifying the monomer component of a specific composition with a specific emulsifier, coagulating the emulsion polymerization liquid emulsion polymerized up to a high polymerization conversion rate by adding the emulsion polymerization liquid to a specific coagulant liquid being stirred violently to some extent, and subsequently washing the generated hydrous crumbs and then dehydrating and drying with a special screw-type extruder.

The present inventors have also found out that in the case of an acrylic rubber, when the polymerization conversion rate is raised to more than a specific rate in order to improve the strength properties, the amount of gel insoluble in methyl ethyl ketone sharply increases so that the processability of the obtained rubber is degraded, but the gel insoluble in methyl ethyl ketone once increased disappears by drying, melting and kneading up to a state in which the hydrous crumbs substantially contain no water (specific water content) with a screw-type extruder, so that the obtained acrylic rubber is excellent in water resistance and has strength properties and processability highly well-balanced.

The present inventors have conducted research based on these findings and completed the present invention.

Thus, according to the present invention, there is provided an acrylic rubber, comprising a polymer composition of: 70 to 99.9% by weight of a bonding unit derived from at least one (meth) acrylic acid ester selected from the group consisting of (meth) acrylic acid alkyl ester and (meth) acrylic acid alkoxyalkyl ester; 0.1 to 10% by weight of a bonding unit derived from a monomer containing a reactive group; and 0 to 20% by weight of a bonding unit derived from other monomer, wherein an ash content is 0.15% by weight or less, a total amount of sodium and sulfur in the ash is 60% by weight or more with respect to the total ash content, a ratio of sodium to sulfur ([Na] / [S]) by weight ratio is in the range of 0.5 to 2.5, a ratio of a Z-average molecular weight (Mz) to a weight average molecular weight (Mw) is 1.3 or more, and a weight average molecular weight (Mw) is in the range of 1,000,000 to 5,000,000.

In the acrylic rubber of the present invention described above, a ratio of sodium to sulfur in the ash ([Na] / [S]) is preferably in the range of 0.7 to 1.

In the above acrylic rubber of the present invention, an amount of gel insoluble in methyl ethyl ketone in the rubber is preferably 50% by weight or less.

In the acrylic rubber of the present invention described above, it is more preferable that the amount of gel insoluble in methyl ethyl ketone in the rubber is 10% by weight or less.

In the acrylic rubber of the present invention described above, pH is preferably 6 or less.

In the acrylic rubber of the present invention described above, a ratio($[\eta]$ 100°C/ $[\eta]$ 60°C) of the complex viscosity ($[\eta]$ 100°C) at 100°C to the complex viscosity ($[\eta]$ 60°C) at 60°C is preferably 0.8 or more.

In the above-mentioned acrylic rubber of the present invention, the acrylic rubber is preferably in the form of a sheet or a bale.

In the acrylic rubber of the present invention described above, a specific gravity is preferably 0.8 or more.

According to the present invention, there is provided a method for producing an acrylic rubber, the method comprising: an emulsion polymerization process to emulsify a monomer component comprising at least one (meth) acrylic acid ester selected from the group consisting of (meth) acrylic acid alkyl ester and (meth) acrylic acid alkoxyalkyl ester, a monomer containing a reactive group, and, if necessary, a copolymerizable other monomer, with water and a sulfuric acid emulsifier, and to emulsion-polymerize the emulsified monomer to 90% by weight or more of a polymerization conversion rate in the presence of a polymerization catalyst to obtain an emulsion polymerization liquid; a coagulation process to add the obtained emulsion polymerization liquid to a sodium salt aqueous solution being stirred at a peripheral speed of 0.5 m/s or higher to generate hydrous crumbs; a washing process to wash the generated hydrous crumbs with hot water; and a dehydration/drying process, using a screw-type extruder provided with a dehydration barrel having a dehydration slit, a drying barrel under reduced pressure, and a die at a tip thereof, to dehydrate the washed hydrous crumbs to a water content of 1 to 40% by weight by the dehydration barrel, thereafter to dry the dehydrated hydrous crumbs to a water content of less than 1% by weight by the drying barrel, and to extrude a dry rubber from the die.

In the above method for producing an acrylic rubber, a peripheral speed is preferably 1.5 m / s or higher.

In the above method for producing an acrylic rubber, the sodium salt aqueous solution is preferably a sodium sulfate aqueous solution.

In the above method for producing an acrylic rubber, a temperature of the hydrous crumbs supplied to the screw-type extruder is preferably 40°C or higher.

Further, according to the present invention, there is provided a rubber composition containing the above rubber component containing the above acrylic rubber, a reinforcing agent and a cross-linking agent.

Further, according to the present invention, there is provided a rubber cross-linked product obtained by cross-linking the above rubber composition.

[EFFECT OF THE INVENTION]

According to the present invention, an acrylic rubber excellent in water resistance, having well-balanced strength properties and processability is provided, and a method for producing the same, a rubber composition containing the acrylic rubber, and a rubber cross-linked product obtained by cross-linking the above-mentioned rubber composition are provided.

[BRIEF DESCRIPTION OF THE DRAWINGS]

FIG. 1 is a diagram schematically showing an example of an acrylic rubber production system used for producing an acrylic rubber according to an embodiment of the present invention
FIG. 2 is a diagram showing a configuration of the screw-type extruder of FIG. 1.

[DETAILED DESCRIPTION OF EMBODIMENTS]

The acrylic rubber of the present invention, comprises a polymer composition of: 70 to 99.9% by weight of a bonding unit derived from at least one (meth) acrylic acid ester selected from the group consisting of (meth) acrylic acid alkyl ester and (meth) acrylic acid alkoxyalkyl ester; 0.1 to 10% by weight of a bonding unit derived from a monomer containing a reactive group; and 0 to 20% by weight of a bonding unit derived from other monomer, wherein an ash content is 0.15% by weight or less, a total amount of sodium and sulfur in the ash is 60% by weight or more with respect to the total ash content, a ratio of sodium to sulfur ([Na] / [S]) by weight ratio is in the range of 0.5 to 2.5, a ratio of a Z-average molecular weight (Mz) to a weight average molecular weight (Mw) is 1.3 or more, and a weight average molecular weight (Mw) is in the range of 1,000,000 to 5,000,000.

<Monomer Component>

The acrylic rubber of the present invention is substantially composed of at least one (meth) acrylic acid ester selected from the group consisting of (meth) acrylic acid alkyl ester and (meth) acrylic acid alkoxyalkyl ester; a monomer containing a reactive group; and a copolymerizable other monomer to be contained, if necessary, as monomer components constituting the acrylic rubber. In the present invention, "(meth) acrylic acid ester" is used as a general term referring the esters of acrylic acid and / or methacrylic acid.

The aforementioned (meth) acrylic acid alkyl ester is not particularly limited, but a (meth) acrylic acid alkyl ester, having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms, is usually used. Specific examples of the alkyl (meth) acrylate include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like, and ethyl (meth) acrylate, n-butyl (meth) acrylate are preferable, and ethyl acrylate and n-butyl acrylate are more preferable.

The (meth) acrylic acid alkoxyalkyl ester is not particularly limited, but a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms is usually used. Specific examples of the (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

At least one of (meth) acrylic acid ester selected from the group consisting of the aforementioned (meth) acrylic acid alkyl esters and (meth) acrylic acid alkoxyalkyl esters may be used alone or in combination of two or more. The ratio of the bonding unit derived from these monomers in the acrylic rubber (hereinafter occasionally referred to as "monomer component") is 70 to 99.9% by weight, preferably 85 to 99.5% by weight, more preferably 92 to 99% by weight. If the amount of (meth) acrylic acid ester in the monomer components is excessively small, the weather resistance, heat resistance, and oil resistance of the resulting acrylic rubber may decrease, which is not preferable.

Further, the above monomer containing a reactive group may be appropriately selected depending on the purpose of use, but when it is usually a monomer having at least one functional group selected from the group consisting of a carboxyl group, an epoxy group and a halogen group, preferably a monomer having at least one functional group selected from the group consisting of a carboxyl group, an epoxy group and a chlorine atom is preferable, since compression set resistance and water resistance of the obtained acrylic rubber can be highly improved. Furthermore, a halogen group is not particularly limited, but a chlorine atom is preferable in enhancing compression set resistance and oil resistance.

As the monomer having a carboxyl group, an ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not particularly limited, but an ethylenically unsaturated monocarboxylic acid having 3 to 12 carbon atoms is preferable, and examples thereof include acrylic acid, methacrylic acid, $\alpha$-ethylacrylic acid, crotonic acid, and cinnamic acid.

As the ethylenically unsaturated dicarboxylic acid as described above, an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

As the ethylenically unsaturated dicarboxylic acid monoester, usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably a butendionic acid having 4 carbon atoms and an alkyl monoester having 2 to 6 carbon atoms.

Specific examples of such ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the aforementioned epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

Examples of the monomer having a halogen group include unsaturated alcohol ester of halogen-containing saturated carboxylic acid, (meth) acrylic acid haloalkyl ester, (meth) acrylic acid haloacyloxyalkyl ester, (meth) acrylic acid (haloacetylcarbamoyloxy) alkyl ester, halogen-containing unsaturated ether, halogen-containing unsaturated ketones, halomethyl group-containing aromatic vinyl compounds, halogen-containing unsaturated amides, haloacetyl group-containing unsaturated monomers, and the like.

Specific examples of the unsaturated alcohol ester of the halogen-containing saturated carboxylic acid include vinyl chloroacetate, vinyl 2-chloropropionate, allyl chloroacetate, and the like. Specific examples of the (meth) acrylic acid haloalkyl ester include chloromethyl (meth) acrylic acid, 1-chloroethyl (meth) acrylic acid, 2-chloroethyl (meth) acrylic acid, and 1,2-dichloroethyl (meth) acrylic acid, (meth) acrylic acid 2-chloropropyl, (meth) acrylic acid 3-chloropropyl, (meth) acrylic acid 2,3-dichloropropyl and the like. Specific examples of the (meth) acrylic acid haloacyloxyalkyl ester include (meth) acrylic acid 2-(chloroacetoxy) ethyl, (meth) acrylic acid 2-(chloroacetoxy) propyl, and (meth) acrylic acid 3-(chloro). Acetoxy) propyl, (meth) acrylic acid 3-(hydroxychloroacetoxy) propyl (meth) acrylate and the like. Examples of the (meth) acrylic acid (haloacetylcarbamoyloxy) alkyl ester include (meth) acrylic acid 2-(chloroacetylcarbamoyloxy) ethyl and (meth) acrylic acid 3-(chloroacetylcarbamoyloxy) propyl, and the like. Specific examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like. Further, specific examples of the halogen-containing unsaturated ketone include 2-chloroethyl vinyl ketone, 3-chloropropyl vinyl ketone, 2-chloroethyl allyl ketone and the like. Specific examples of the halomethyl group-containing aromatic vinyl compound include p-chloromethylstyrene, m-chloromethylstyrene, o-chloromethylstyrene, p-chloromethyl-$\alpha$-methylstyrene and the like. Specific examples of the halogen-containing unsaturated amide include N-chloromethyl (meth) acrylamide, and specific examples of the haloacetyl group-containing unsaturated monomer include 3-(hydroxychloroacetoxy) propylallyl ether, p-vinylbenzylchloroacetic acid ester and the like.

As the monomer containing a reactive group mentioned above, a diene monomer having a radical-reactive carbon-carbon double bond group can also be used. Examples of such a diene monomer include conjugated diene and non-conjugated diene, and examples of the conjugated diene include 1,3-butadiene, isoprene, and piperylene. Examples of the non-conjugated diene include ethylidene norbornene, dicyclopentadiene, dicyclopentadienyl (meth) acrylate, and 2-dicyclopentadienyl ethyl (meth) acrylate and the like.

These monomers containing a reactive group are used alone or in combination of two or more, and the proportion in the acrylic rubber is 0.1 to 10% by weight, preferably 0.5 to 5% by weight, more preferably 1 to 3% by weight.

Other monomers than the above-mentioned monomers used as necessary (hereinafter, simply referred to as "other monomers") are not particularly limited as long as they can be copolymerized with the above-mentioned monomers, and the examples thereof include aromatic vinyl, ethylenically unsaturated nitriles, acrylamide-based monomers, and other olefin-based monomer and the like. Examples of aromatic vinyl include styrene, $\alpha$-methylstyrene, divinylbenzene and the like. Examples of the ethylenically unsaturated nitrile include acrylonitrile and methacrylonitrile. Examples of the acrylamide-based monomer include acrylamide and methacrylamide. Examples of other olefin-based monomers include ethylene, propylene, vinyl acetate, ethyl vinyl ether, and butyl vinyl ether.

These other monomers described above may be used alone or in combination of two or more, and the ratio of the other monomers in the acrylic rubber is restricted in the range of 0 to 20% by weight, preferably 0 to 10% by weight, more preferably 0 to 5% by weight.

<Acrylic Rubber>

The acrylic rubber of the present invention is a polymer obtained from: at least one (meth) acrylic acid ester selected from the group consisting of the above (meth) acrylic acid alkyl ester and (meth) acrylic acid alkoxyalkyl ester; a monomer containing a reactive group; and other monomer contained, as required, wherein each ratio of the components in the acrylic rubber is: the bonding unit derived from the at least one (meth) acrylic acid ester selected from the group consisting of (meth) acrylic acid alkyl ester and (meth) acrylic acid alkoxyalkyl ester, which is the main component, is in the range of 70 to 99.9% by weight, preferably 85 to 99.5% by weight, more preferably 92 to 99% by weight; the bonding unit derived from monomer containing a reactive group is in the range of 0.1 to 10% by weight, preferably 0.5 to 5% by weight, more preferably 1 to 3% by weight; and the bonding unit derived from other monomer is in the range of 0 to 20% by weight, preferably 0 to 10% by weight, more preferably 0 to 5% by weight. By setting each ratio of the components in the acrylic rubber within these ranges, the objective of the present invention can be highly achieved, and when the acrylic rubber is cross-linked, water resistance and compression set resistance of the cross-linked product are remarkably improved, which is preferable.

When the ash content of acrylic rubber of the present invention is 0.15% by weight or less, preferably 0.13% by weight or less, more preferably 0.10% by weight or less, it is preferable, since the water resistance is highly excellent. The lower limit of the ash content of the acrylic rubber of the present invention is not particularly limited, but when it is usually 0.0001% by weight or more, preferably 0.0005% by weight or more, more preferably 0.001% by weight or more, particularly preferably 0.005% by weight or more, most preferably 0.01% by weight or more, it is preferable since the stickiness to the metal surface is reduced so that the workability is improved. For example, the ash content in which the water resistance and the anti-stickiness to the metal surface are highly well-balanced is usually in the range of 0.0001 to 0.15% by weight, preferably 0.0005 to 0.14% by weight, more preferably 0.001 to 0.13% by weight, particularly preferably 0.005 to 0.12% by weight, most preferably 0.01 to 0.1% by weight.

When the total amount of sodium and phosphorus in the ash in the acrylic rubber of the present invention accounts for 60% by weight or more, preferably 70% by weight or more, more preferably 80% by weight or more with respect to the total ash content, it is preferable, since the water resistance of the acrylic rubber is high.

When the ratio of sodium to sulfur ($[Na] / [S]$) by weight ratio in the ash of the acrylic rubber of the present invention is in the range of 0.5 to 2.5, preferably 0.6 to 1.5, more preferably 0.7 to 1, particularly preferably 0.75 to 0.95, most preferably 0.8 to 0.9, it is preferable, since the water resistance is highly excellent.

When the ratio ($Mz / Mw$) of the Z-average molecular weight ($Mz$) and the weight average molecular weight ($Mw$) of the acrylic rubber of the present invention is, by an absolute molecular weight distribution that emphasizes high molecular weight substances measured by GPC-MALS, is in the range of 1.3 or more, preferably 1.4 to 5, more preferably 1.5 to 2, it is preferable, since the processability and strength properties of acrylic rubber are highly well-balanced, and changes in physical properties during storage are alleviated.

When the weight average molecular weight ($Mw$) of the acrylic rubber of the present invention is, in an absolute molecular weight measured by GPC-MALS, is in the range of 1,000,000 to 5,000,000, preferably 1,100,000 to 4,000,000, more preferably 1,200,000 to 3,000,000, most preferably 1,300,000 to 2,500,000, it is preferable, since the processability, strength characteristics and compression permanent strain resistance when mixed with acrylic rubber are highly well-balanced.

The gel amount of the acrylic rubber of the present invention may be appropriately selected according to the purpose of use of the rubber, and is not particularly limited, but when the amount of gel insoluble in methyl ethyl ketone of the acrylic rubber of the present invention is usually 50% by weight or less, preferably 30% by weight or less, more preferably 20% by weight or less, particularly preferably 10% by weight or less, most preferably 5% by weight or less, it is preferable, since the processability and strength characteristics of the acrylic rubber are highly well-balanced.

The glass transition temperature (Tg) of the acrylic rubber of the present invention may be appropriately selected according to the purpose of use of the rubber, but when it is usually 20°C or lower, preferably 10°C or lower, more preferably 0°C or lower, it is preferable, since processability and cold resistance of the acrylic rubber is excellent. The lower limit of the glass transition temperature (Tg) of acrylic rubber is not particularly limited, but it is usually -80°C or higher, preferably -60°C or higher, and more preferably -40°C or higher.

The specific gravity of the acrylic rubber of the present invention is appropriately selected according to the purpose of use of the rubber, but when it is usually in the range of 0.7 to 1.5, preferably 0.8 to 1.4, more preferably 0.9 to 1.3, particularly preferably 0.95 to 1.25, most preferably 1.0 to 1.2, it is preferable, since the storage stability of the acrylic rubber is excellent.

The water content of the acrylic rubber of the present invention is appropriately selected according to the purpose of use of the rubber, but when it is usually less than 1% by weight, preferably 0.8% by weight or less, more preferably 0.6% by weight or less, it is preferable, since the vulcanization property of the acrylic rubber is optimized and the properties such as heat resistance and water resistance of the cross-linked rubber are highly improved.

The complex viscosity ($[\eta]$ 60°C) of the acrylic rubber of the present invention at 60°C is not particularly limited, but when it is usually in the range of 15,000 Pa·s or less, preferably 2,000 to 10,000 Pa·s, more preferably 2,500 to 7,000 Pa·s, most preferably 2,700 to 5,500 Pa·s. The acrylic rubber in this range is preferable, since it has excellent processability, oil resistance and shape retention.

The complex viscosity ($[\eta]$ 100°C) of the acrylic rubber of the present invention at 100°C is not particularly limited, but when it is usually in the range of 1,500 to 6,000 Pa·s, preferably 2,000 to 5,000 Pa·s, more preferably 2,500 to 4,000 Pa·s, most preferably 2,500 to 3,500 Pa·s. The acrylic rubber in this range is preferable, since it has excellent processability, oil resistance and shape retention.

The ratio ($[\eta]$ 100°C / $[\eta]$ 60°C) of the complex viscosity ($[\eta]$ 100°C) of the acrylic rubber of the present invention at 100°C to the complex viscosity ([η] 60°C) at 60°C is not particularly limited, but it is usually 0.5 or more, preferably 0.6 or more, more preferably 0.75 or more, particularly preferably 0.8 or more, most preferably 0.83 or more. Further, the ratio ([η] 100°C / [η] 60°C) of the complex viscosity ([η] 100°C) at 100°C to the complex viscosity ([η] 60°C) at 60°C is usually 0.5 to 0.98, preferably 0.6 to 0.95, more preferably 0.75 to 0.93, particularly preferably 0.8 to 0.93, most preferably 0.83 to 0.93. In this case, it is preferable, since the processability, oil resistance, and shape retention of the acrylic rubber are highly well-balanced.

The pH of the acrylic rubber of the present invention is not particularly limited, but when it is usually in the range of 6 or less, preferably 2 to 6, more preferably 2.5 to 5.5, and most preferably 3 to 5, it is preferable, since the storage stability of the acrylic rubber is highly improved.

The Mooney viscosity (ML1+4,100°C) of the acrylic rubber of the present invention is not particularly limited, but when it is usually in the range of 10 to 150, preferably 20 to 100, more preferably 25 to 70, it is preferable, since the processability and strength properties of the acrylic rubber are highly well-balanced.

The shape of the acrylic rubber of the present invention is not particularly limited, but it may be selected appropriately according to the purpose of use, and the shape can be for example crumb-shaped, powder-shaped, rod-shaped, sheet-shaped, or bale-shaped, but the sheet-shaped or bale-shaped is preferable, since it is remarkably excellent in workability and storage stability.

The sheet-shaped acrylic rubber or the bale-shaped acrylic rubber of the present invention, which is one embodiment of the above-described acrylic rubber, is preferable, since it remarkably excels over the crumb-shaped acrylic rubber and the like in workability, and specific surface area of the acrylic rubber is small so that it is remarkably excellent in storage stability. The sheet-shaped acrylic rubber or the bale-shaped acrylic rubber of the present invention is in a raw rubber state and uncross-linked.

The specific gravity of the sheet-shaped acrylic rubber or the bale-shaped acrylic rubber of the present invention is not particularly limited, but it is usually 0.7 or more, preferably 0.8 or more, more preferably 0.9 or more, particularly 0.95 or more, most preferably 1.0 or more. Further, when the specific gravity of the sheet-shaped acrylic rubber or the bale-shaped acrylic rubber of the present invention is usually in the range of 0.7 to 1.5, preferably 0.8 to 1.4, more preferably 0.9 to 1.3, particularly preferably 0.95 to 1.25, most preferably 1.0 to 1.2, it is preferable, since the storage stability and the processability are highly well-balanced.

The thickness of the sheet-shaped acrylic rubber of the present invention is not particularly limited and is appropriately selected according to the purpose of use, but when it is usually in the range of 1 to 40 mm, preferably 2 to 35 mm, more preferably 3 to 30 mm, most preferably 5 to 25 mm, it is preferable, since the workability, the storage stability and the productivity are highly well-balanced. The width of the sheet-shaped acrylic rubber of the present invention is not particularly limited and is appropriately selected according to the purpose of use, but when it is usually in the range of 300 to 1,200 mm, preferably 400 to 1,000 mm, more preferably 500 to 800 mm, it is preferable, since the handleability is particularly excellent. The length of the sheet-shaped acrylic rubber of the present invention is not particularly limited, but when it is usually in the range of 300 to 1,200 mm, preferably 400 to 1,000 mm, more preferably 500 to 800 mm, it is preferable, since the handleability is particularly excellent.

The shape of the bale-shaped acrylic rubber of the present invention is not particularly limited and is appropriately selected according to the purpose of use, but in many cases, rectangular is preferable. The size of the bale-shaped acrylic rubber of the present invention is not particularly limited and is appropriately selected according to the purpose of use, but it is appropriate that the width is usually in the range of 100 to 800 mm, preferably 200 to 500 mm, more preferably 250 to 450 mm, the length is usually in the range of 300 to 1,200 mm, preferably 400 to 1,000 mm, more preferably 500 to 800 mm, and it is appropriate that the height (thickness) is usually in the range of 50 to 500 mm, preferably 100 to 300 mm, more preferably 150 to 250 mm.

<Method for Producing Acrylic Rubber>

The acrylic rubber having excellent properties can be produced, for example, by the method for producing of the present invention comprising the following processes of (1) to (5):

(1) an emulsion polymerization process to emulsify a monomer component comprising at least one (meth) acrylic acid ester selected from the group consisting of (meth) acrylic acid alkyl ester and (meth) acrylic acid alkoxyalkyl ester, a monomer containing a reactive group, and, if necessary, a copolymerizable other monomer, with water and a sulfuric acid emulsifier, and to emulsion-polymerize the emulsified monomer to 90% by weight or more of a polymerization conversion rate in the presence of a polymerization catalyst to obtain an emulsion polymerization liquid;
(2) a coagulation process to add the obtained emulsion polymerization liquid to a sodium salt aqueous solution being stirred at a peripheral speed of 0.5 m/s or higher to generate hydrous crumbs;
(3) a washing process to wash the generated hydrous crumbs with hot water;

(4) a drying process to dry the washed hydrous crumbs; and
(5) a dehydration/drying process, using a screw-type extruder provided with a dehydration barrel having a dehydration slit, a drying barrel under reduced pressure, and a die at a tip thereof, to dehydrate the washed hydrous crumbs to a water content of 1 to 40% by weight by the dehydration barrel, thereafter to dry the dehydrated hydrous crumbs to a water content of less than 1% by weight by the drying barrel, and to extrude a dry rubber from the die.

(Emulsion Polymerization Process)

The emulsion polymerization process in the method for producing an acrylic rubber of the present invention is a process to emulsify a monomer component comprising at least one (meth) acrylic acid ester selected from the group consisting of (meth) acrylic acid alkyl ester and (meth) acrylic acid alkoxyalkyl ester, a monomer containing a reactive group, and a copolymerizable other monomer used as necessary, with water and a sulfuric acid emulsifier, and to emulsion-polymerize the emulsified monomer to 90% by weight or more of a polymerization conversion rate in the presence of a polymerization catalyst to obtain an emulsion polymerization liquid.

The monomer component used here is the same as those exemplified above and those described as preferable ranges. The amount of the monomer component used may be appropriately selected so that the acrylic rubber has the above composition.

As the sulfuric acid-based emulsifier used in emulsion polymerization, a sulfuric acid ester-type anionic emulsifier can be preferably used. Examples of the sulfate ester type anionic emulsifier include sodium lauryl sulfate, ammonium lauryl sulfate, sodium myristyl sulfate, sodium laureth sulfate, sodium polyoxyethylene alkyl sulfate, sodium polyoxyethylene alkylaryl sulfate, and the like, and sodium lauryl sulfate is preferable.

These sulfuric acid-based emulsifiers can be used alone or in combination of two or more, and the amount used with respect to 100 parts by weight of the monomer component is n the range of usually 0.01 to 10 parts by weight, preferably 0.1 to 5 parts by weight, more preferably 1 to 3 parts by weight.

In the present invention, in addition to the above-mentioned sulfuric acid-based emulsifier, other emulsifiers may be used in combination, if necessary. The types of emulsifiers other than the sulfuric acid-based emulsifier are not limited, and examples thereof include anionic emulsifiers other than the sulfuric acid-based emulsifier, cationic emulsifiers, and nonionic emulsifiers and the like, and nonionic emulsifiers are particularly preferably used.

Examples of anionic emulsifiers other than sulfuric acid-based emulsifiers include: fatty acid-based emulsifiers such as sodium octanate, sodium decanoate, sodium laurate, sodium myristate, sodium palmitate, and sodium stearate; sodium hexanesulfonate, sodium octane sulfonate, sodium decane sulfonate, sodium toluene sulfonate, sodium cumene sulfonate, sodium octylbenzene sulfonate, sodium dodecylbenzene sulfonate, ammonium dodecylbenzene sulfonate, sodium naphthalene sulfonate, sodium alkylnaphthalene sulfonate, alkyl sulfonic acid-based emulsifiers such as diphenyl ether sodium disulfonate; sulfosuccinic acid-based emulsifiers such as sodium dioctyl sulfosuccinate, sodium dihexyl sulfosuccinate; phosphates such as sodium lauryl phosphate, potassium lauryl phosphate, sodium polyoxyalkylene alkyl ether phosphate; and the like.

Examples of the cationic emulsifier include alkyl trimethylammonium chloride, dialkylammonium chloride, benzyl ammonium chloride and the like.

Examples of nonionic emulsifiers include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester. Among these, polyoxyalkylene alkyl ether and polyoxyalkylene alkylphenol ether are preferable, and polyoxyethylene alkyl ether and polyoxyethylene alkylphenol ether are more preferable.

These other emulsifiers other than the sulfuric acid emulsifier can be used alone or in combination of two or more kinds, and the amount used may be appropriately selected within a range that does not impair the effects of the present invention, and the amount is usually 0.01 to 10 parts by weight, preferably 0.1 to 5 parts by weight, more preferably 1 to 3 parts by weight with respect to the monomer component 100 parts by weight.

The method for mixing the monomer component, water and the emulsifier may be according to a conventional method, and a method of stirring the monomer, the emulsifier and water using a stirrer such as a homogenizer or a disk turbine, and the like are employed. The amount of water used with respect to 100 parts by weight of the monomer component is usually in the range of 10 to 750 parts by weight, preferably 50 to 500 parts by weight, more preferably 100 to 400 parts by weight.

The polymerization catalyst used in the emulsion polymerization in the method for production of the present invention may be a method usually used in emulsion polymerization, but, for example, a redox catalyst composed of a radical generator and a reducing agent can be used.

Examples of the radical generator include peroxides and azo compounds, and peroxides are preferable and an inorganic peroxide or an organic peroxide is used.

Examples of the above inorganic peroxides include, for example, sodium persulfate, potassium persulfate, hydrogen peroxide, ammonium persulfate and the like. Among these, potassium persulfate, hydrogen peroxide and ammonium persulfate are preferable, and potassium persulfate is particularly preferable.

The organic peroxide is not particularly limited as long as it is used in emulsion polymerization of the acrylic rubber. Examples of the organic peroxide include, for example, 2,2-di(4,4-di-(t-butylperoxy) cyclohexyl) propane , 1- di-(t-hexylperoxy) cyclohexane, 1,1-di-(t-butylperoxy) cyclohexane, 4,4-di-(t-butylperoxy) n-butylvalerate, 2, 2-di-(t- butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di- t-hexyl peroxide, di(2-t-butylperoxyisopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexylper alkylbenzenesulfonic acid-based emulsifiers such as sodium dodecyl benzenesulfonate oxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy- 2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylyloxy-2-ethylhexyl monocarbonate, 2,5-dimethyl-2,5- di(benzoylperoxy) hexane, t-butylperoxyacetate, t-hexylperoxybenzoate, t-butyl peroxybenzoate, 2,5-dimethyl-2,5-di(t- butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane], 2,2'-azobis (propane-2-carboamidine), 2,2'-azobis [N-(2-carboxyethyl)-2- methylpropanamide], 2,2'-azobis {2- [1-(2-hydroxyethyl)-2-imidazoline-2-yl] propane}, 2,2'-azobis (1-imino-1-pyrrolidino- 2-methylpropane) and 2,2'-azobis {2-methyl-N- [1,1-bis (hydroxymethyl)-2-hydroxyethyl] propanamide}, and the like.

These radical generators may be used alone or in combination of two or more, and the amount thereof is usually in the range of 0.0001 to 5 parts by weight, preferably 0.0005 to 1 parts by weight, more preferably 0.001 to 0.5 part by weight with respect to 100 parts by weight of the monomer component.

The reducing agent can be used without particular limitation as long as it is used in a redox catalyst for emulsion polymerization, but in the present invention, it is particularly preferable to use at least two reducing agents. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable. These metal ion compounds in a reduced state can be used alone or in combination of two or more, and the amount of the metal ion component used with respect to 100 parts by weight of the monomer component is usually in the range of 0.000001 to 0.01 parts by weight, preferably 0.00001 to 0.001 parts by weight, more preferably 0.00005 to 0.0005 parts by weight.

These reducing agent other than the metal ion compound in the reduced state are exemplified by: ascorbic acid such as ascorbic acid, sodium ascorbate, potassium ascorbate or a salt thereof; erythorbic acid such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogensulfite, potassium hydrogensulfite and the like; thiosulfates such as sodium thiosulfate and potassium thiosulfate; phosphorus acid such as phosphorus acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid or a salt thereof, sodium formaldehyde sulfoxylate and the like are preferable, and ascorbic acid or a salt thereof is particularly preferable.

These reducing agents other than the metal ion compound in the reduced state can be used alone or in combination of two or more, and the amount used with respect to 100 parts by weight of the monomer component is usually in the range of 0.001 to 1 part by weight, preferably 0.005 to 0.5 part by weight, more preferably 0.01 to 0.3 part by weight.

A preferable combination of the metal ion compound in the reduced state and the other reducing agent is a combination of ferrous sulfate and ascorbic acid or a salt thereof and / or sodium formaldehyde sulfoxylate. A more preferable combination is a combination of ferrous sulfate with ascorbate and / or sodium formaldehyde sulfoxylate. The most preferable combination is a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the monomer component is usually in the range of 0.001 to 1 part by weight, preferably 0.005 to 0.5 part by weight, more preferably 0.01 to 0.3 part by weight.

The amount of water used with respect to 100 parts by weight of the monomer component in the emulsion polymerization process (emulsion polymerization reaction) may be only the amount used for preparing the emulsion of the above monomer component, but is usually adjusted to be in the range of 10 to 1,000 parts by weight, preferably 50 to 500 parts by weight, more preferably 80 to 400 parts by weight, and most preferably 100 to 300 parts by weight.

The emulsion polymerization reaction method may be a conventional method, and may be a batch method, a semi-batch method, or a continuous method. The polymerization temperature and the polymerization time are not particularly limited and can be appropriately selected in accordance with the type of the polymerization initiator used and the like. The polymerization temperature is usually 0 to 100°C, preferably 5 to 80°C, more preferably 10 to 50°C, and the polymerization time is usually 0.5 to 100 hours, preferably 1 to 10 hours.

When the polymerization conversion rate of the emulsion polymerization reaction is usually 90% by weight or more, preferably 93% by weight or more, more preferably 95% by weight or more, it is preferable, since the acrylic rubber produced is excellent in strength properties and free of monomer odor. A polymerization terminator may be used for termination of the polymerization.

(Coagulation Process)

The coagulation process in the method for producing an acrylic rubber of the present invention is characterized in that the above emulsion polymerization liquid obtained is added in a sodium salt aqueous solution being stirred at a peripheral speed of 0.5 m/s or higher to produce hydrous crumbs.

The solid content concentration of the emulsion polymerization liquid used in the coagulation process is not particularly limited, but it is usually adjusted to 5 to 50% by weight, preferably 10 to 45% by weight, more preferably 20 to 40% by weight.

The sodium salt used here is not particularly limited, but examples thereof include: inorganic sodium salts such as sodium chloride, sodium nitrate, sodium sulfate and the like; and organic sodium salts such as sodium formate, sodium acetate and the like. Among these, inorganic sodium salts are preferable, and sodium sulfate is particularly preferable.

These sodium salts can be used individually or in combination of two or more, and the amount used with respect to 100 parts by weight of the monomer component is usually in the range of 0.01 to 100 parts by weight, preferably 0.1 to 50 parts by weight, more preferably 1 to 30 parts by weight. When the amount of sodium salt is in this range, it is preferable, since not only the acrylic rubber is sufficiently solidified, but also the compression set resistance and water resistance when the acrylic rubber is cross-linked can be highly improved. In the present invention, a coagulant other than the sodium salt may be used in combination as long as the effects of the present invention are not impaired.

The concentration of sodium salt in the sodium salt aqueous solution used is not particularly limited, but when it is usually in the range of 0.1 to 20% by weight, preferably 0.5 to 10% by weight, more preferably 1 to 5% by weight, it is preferable, since the particle size of the hydrous crumbs generated can be focused in a specific region, and uniformly.

The temperature of the aqueous sodium salt solution to be used is not particularly limited, but when it is usually within a range of 40°C or higher, preferably 40 to 90°C, and more preferably 50 to 80°C, it is preferable, since uniform hydrous crumbs are generated.

In the present invention, the stirring number of the sodium salt aqueous solution being stirred is represented by the number of rotations of the stirring blade in the stirring device provided in the coagulation tank containing the sodium salt aqueous solution, but the rotation speed is usually in the range of 100 rpm or more, preferably 200 to 1,000 rpm, more preferably 300 to 900 rpm, and most preferably 400 to 800 rpm, since it is preferable to vigorously stir the above aqueous solution in order to make the particle size of the hydrous crumbs small and uniform. That is, it is preferable that the rotation speed is such a rotation speed at which the coagulant liquid is vigorously stirred to some extent so that the particle size of the hydrous crumbs to be generated can be focused to a size that is uniform and has a good ash removal efficiency. By setting the rotation speed to the above lower limit or more, it is possible to suppress the generation of the hydrous crumbs having excessively large and small particle sizes, and by setting the rotation speed to the above upper limit or less, it is possible to control the coagulation reaction more easily.

The peripheral speed of the sodium salt aqueous solution being stirred is represented by the speed of the outer circumference of the stirring blade of the above-mentioned stirring device, but it is preferable that the above aqueous solution is vigorously stirred to a certain extent because the particle size of the generated hydrous crumbs can be made small and uniform. This peripheral speed is 0.5 m/s or more, preferably 1 m/s or more, more preferably 1.5 m/s or more, particularly preferably 2 m/s or more, particularly 2.5 m/s or more. On the other hand, the upper limit of the peripheral speed of the sodium salt aqueous solution being stirred is not particularly limited, but when it is usually 50 m/s or less, preferably 30 m/s or less, more preferably 25 m/s or less, particularly preferably 20 m/s or less, it is preferable, since the coagulation reaction can be easily controlled.

When the above-mentioned conditions of the coagulation reaction in the coagulation process(contact method, solid content concentration of emulsion polymerization liquid, concentration of the coagulant liquid, temperature, rotation speed and peripheral speed during the stirring of the coagulant liquid, and the like) are appropriately set within a specific range, it is preferable, since, by doing so, the shape and the crumb diameter of the hydrous crumb are uniform and focused, so that the removal of the emulsifier and the coagulant in the hydrous crumbs in the washing and the dehydration is significantly improved.

It is preferable that the hydrous crumbs thus generated satisfy all of the following conditions (a) to (e). Here, it should be noted that the JIS sieve is in compliance with Japanese Industrial Standards (JIS Z 8801-1).

(a) The ratio of the hydrous crumbs that do not pass through a JIS sieve having a mesh opening of 9.5 mm is 10% by weight or less,
(b) The ratio of the hydrous crumbs that pass through the JIS sieve having a mesh opening of 9.5 mm but do not pass through a JIS sieve having a mesh opening of 6.7 mm is 30% by weight or less,
(c) The ratio of the hydrous crumbs that pass through the JIS sieve having a mesh opening of 6.7 mm but do not pass through a JIS sieve having a mesh opening of 710 $\mu$m is 20% by weight or more,
(d) The ratio of the hydrous crumbs that pass through the JIS sieve having a mesh opening of 710 $\mu$m but do not pass through a JIS sieve having a mesh opening of 425 $\mu$m is 30% by weight or less, and
(e) The ratio of the hydrous crumbs that pass through the JIS sieve having a mesh opening of 425 $\mu$m is 10% by weight or less.

In the method for producing of present invention, when all the generated hydrous crumbs are sieved, if (a) the proportion of hydrous crumbs that do not pass through the JIS sieve having a mesh opening of 9.5 mm is 10% by weight or less, preferably 5% by weight or less. It is preferably 1% by weight or less, and (b) the proportion of the hydrous crumb that passes through the JIS sieve having a mesh opening of 9.5 mm and does not pass through the JIS sieve having a mesh opening of 6.7 mm is 30% by weight or less, preferably 20% by weight or less, it is more preferably 5% by weight or less, and (c) the proportion of the hydrous crumb that passes through the JIS sieve having a mesh opening of 6.7 mm and does not pass through the JIS sieve having a mesh opening of 710 $\mu$m is 20% by weight or more, preferably 40% by weight or more, more preferably 70% by weight or more, most preferably 80% by weight or more, (d) the proportion of water-containing crumbs that pass through the JIS sieve having a mesh opening of 710 $\mu$m and do not pass through the JIS sieve having a mesh opening of 425 $\mu$m is 30% by weight or less, preferably 20% by weight or less, more preferably 15% by weight or less, and (e) the proportion of hydrous crumb passing through the JIS sieve having a mesh opening of 425 $\mu$m is 10% by weight or less, preferably 5% by weight or less, more preferably 1% by weight or less, it is preferable since the washing efficiency of the emulsifier and the coagulant is remarkably improved and the productivity is also increased.

Further, in the present invention, when the ratio of (f) the hydrous crumbs that pass through the JIS sieve having an opening of 6.7 mm but do not pass through the JIS sieve having an opening of 4.75 mm, with respect to the generated hydrous crumbs is usually 40% by weight or less, preferably 10% by weight or less, more preferably 5% by weight or less, it is preferable, since the washing efficiency of the emulsifier and the coagulant is improved.

Furthermore, in the present invention, when the ratio of the (g) hydrous crumbs that pass through the JIS sieve having an opening of 4.75 mm but do not pass through the JIS sieve having an opening of 710 $\mu$m, with respect to the generated hydrous crumbs is usually 40% by weight or more, preferably 60% by weight or more, more preferably 80% by weight or more, it is preferable, since the removal efficiency of the emulsifier and the coagulant during washing and dehydration is remarkably improved.

Still further, in the present invention, when the ratio of (h) hydrous crumbs that pass through the JIS sieve having an opening of 3.35 mm but do not pass through the JIS sieve having an opening of 710 $\mu$m, with respect to the generated hydrous crumbs is usually 20% by weight or more, preferably 40% by weight or more, more preferably 50% by weight or more, particularly preferably 60% by weight or more, and most preferably 70% by weight or more, it is preferable, since the removal efficiency of the emulsifier and the coagulant during washing and dehydration is remarkably improved.

(Washing Process)

The washing process in the method for producing an acrylic rubber of the present invention, which is a process to wash the hydrous crumbs generated in the above-mentioned coagulation process with hot water.

The washing method is not particularly limited and may be a conventional method. For example, the generated hydrous crumbs can be mixed with a large amount of hot water.

The amount of hot water added in the washing process is not particularly limited, but when the amount of water with respect to 100 parts by weight of the monomer component per one washing is usually in the range of 50 parts by weight or more, preferably 50 to 15,000 parts by weight, more preferably 100 to 10,000 parts by weight, particularly preferably 150 to 5,000 parts by weight, it is preferable, since the ash content in the acrylic rubber can be effectively reduced.

The temperature of the hot water for washing is not particularly limited, but it is preferable to use the hot water because the washing efficiency is improved. The temperature of the hot water to be used is not particularly limited, but when the temperature is usually 40°C or higher, preferably 40 to 100°C, more preferably 50 to 90°C, particularly preferably 60 to 80°C, it is the most preferable, since the washing efficiency can be remarkably increased. By setting the temperature of the hot water to be used above the aforementioned lower limit, the emulsifier and coagulant are released from the hydrous crumbs, so that the washing efficiency is further improved.

The washing time is not particularly limited, but the washing time is usually in the range of 1 to 120 minutes, preferably 2 to 60 minutes, more preferably 3 to 30 minutes.

The number of washings in the washing process is not particularly limited, and is usually 1 to 10 times, preferably a plurality of times, more preferably 2 to 3 times. From the viewpoint of reducing the residual amount of the coagulant in the finally obtained acrylic rubber, it is desirable that the number of times of washing with water is large, but as described above, the number of washings can be significantly reduced by specifying the shape of the hydrous crumbs and the hydrous crumb diameter within a specific range as mentioned above and/or by specifying the washing temperature in the above-mentioned range.

(Dehydration/Drying Process)

The dehydration/drying process in the method for producing of the present invention is characterized by that the hydrous crumbs washed in the above washing process is dehydrated up to water content of 1 to 40% by weight by the dehydration barrel, using the screw-type extruder provided with a dehydration barrel having a dehydration slit, a drying barrel for drying under reduced pressure, and a die at the tip end, and then dried up to water content of less than 1% by weight by the drying barrel and extrude the dry rubber from the die.

In the method for producing of the present invention, the hydrous crumbs to be supplied to the screw-type extruder has desirably the free water removed (straining) after washing.

Draining Process

In the method for producing of the present invention, in order to improve the dehydration efficiency, it is preferable to provide a draining process to separate the free water from the hydrous crumbs after the washing process of above and prior to the drying process.

As the strainer, known ones can be used without particular limitation, and examples thereof include a wire mesh, a screen, an electric sifter, and the like, and among these, the wire mesh and the screen are preferable. The opening of the strainer is not particularly limited, but when it is usually in the range of 0.01 to 5 mm, preferably 0.1 to 1 mm, more preferably 0.2 to 0.6 mm, it is preferable, since the loss of hydrous crumbs is small and the straining can be performed efficiently.

The water content of the hydrous crumbs after straining, which is the water content of the hydrous crumbs to be supplied to the dehydration/drying process is not particularly limited, but it is usually in the range of 50 to 80% by weight, preferably 50 to 70% by weight, more preferably 50 to 60% by weight.

Dehydration/Drying Process

The temperature of the hydrous crumbs after straining, which is the temperature of the hydrous crumbs to be supplied to the subsequent dehydration/drying process is not particularly limited, but when it is usually in the range of 40°C or higher, preferably 40 to 100°C, more preferably 50 to 90°C, particularly preferably 55 to 85°C, most preferably 60 to 80°C, it is preferable, since the hydrous crumbs, having a high specific heat of 1.5 to 2.5 KJ/kg·K and are hard to raise the temperature like the acrylic rubber of the present invention, can be efficiently dehydrated and dried by using the screw-type extruder.

Dehydration of Hydrous Crumbs (Dehydration Barrel section)

In one embodiment of the present invention, dehydration of hydrous crumbs is performed in a dehydration barrel section having a dehydration slit, provided in the screw-type extruder. The opening of the dehydration slit may be appropriately selected according to conditions of use, but when the opening is usually in the range of 0.01 to 5 mm, preferably 0.1 to 1 mm, more preferably 0.2 to 0.6 mm, it is preferable, since loss of the hydrous crumbs is small, and dehydration of the hydrous crumbs can be efficiently performed.

The number of dehydration barrels in the screw-type extruder is not particularly limited, but when the number is usually plural, preferably 2 to 10, more preferably 3 to 6, it is preferable from the viewpoint of efficient dehydration of the sticky acrylic rubber.

There are two types of dehydration from the hydrous crumbs in the dehydration barrel: liquid removal from the dehydration slit (drainage) and steam removal (steam exhausting). In the present invention, the drainage is defined as dehydration, and the steam exhausting is defined as preliminary drying, so that they can be distinguished.

In the case where a screw-type extruder provided with a plurality of dehydration barrels, is used it is particularly preferable to combine drainage and steam exhausting because it is possible to efficiently dehydrate the sticky acrylic rubber. The selection of the dehydration barrel to be a drainage type dehydration barrel or a steam exhausting type dehydration barrel of a screw-type extruder having three or more dehydration barrels may be appropriately made according to the purpose of use, but in order to reduce the ash content in the acrylic rubber to be produced, the number of drainage type barrels is preferably increased, and in order to reduce the water content, the number of steam exhausting type barrels is preferably increased.

The set temperature of the dehydration barrel is appropriately selected depending on the monomer composition of acrylic rubber, the ash content, the water content, the operating conditions, and the like, but it is usually in the range of 60 to 150°C, preferably 70 to 140°C, more preferably 80 to 130°C. The set temperature of the dehydration barrel for dehydration in the drainage state is usually in the range of 60 to 120°C, preferably 70 to 110°C, more preferably 80 to 100°C. The set temperature of the dehydration barrel for preliminarily drying in the steam exhausting state is usually in the range of 100 to 150°C, preferably 105 to 140°C, more preferably 110 to 130°C.

When the water content after the drainage-type dehydration to squeeze water from the hydrous crumbs is usually in the range of 1 to 45% by weight, preferably 1 to 40% by weight, more preferably 5 to 35% by weight, particularly preferably 10 to 35% by weight, most preferably 15 to 35% by weight, it is preferable, since the productivity and the ash removal efficiency are highly well-balanced.

When the dehydration is performed by a centrifuge or the like, dehydration of the sticky acrylic rubber having a reactive group can be hardly done because the acrylic rubber adheres to the dehydration slit portion (the water content is reduced only up to about 45 to 55% by weight), but in the present invention, it is preferable to use a screw-type extruder having a dehydrating slit and forcibly squeezes water by a screw, since the water content came to be reduced up to said content.

When the drainage-type dehydration barrel and the steam-exhausting-type dehydration barrel are provided, the dehydration of the hydrous crumbs after the drainage in the drainage-type dehydration barrel section is usually 5 to 45% by weight, preferably 10 to 40% by weight, more preferably 15 to 35% by weight, and the water content of the hydrous crumbs after the preliminary drying in the steam-exhausting-type dehydration barrel section is usually 1 to 30% by weight, preferably 3 to 20% by weight, more preferably 5 to 15% by weight.

By setting the water content after dehydration in the dehydration process to the above lower limit or more, the dehydration time can be shortened and the deterioration of acrylic rubber can be suppressed, and by setting it to the above upper limit or less, the ash content of acrylic rubber can be sufficiently reduced.

Drying of the Hydrous Crumbs (Drying Barrel Section)

In one embodiment of the present invention, the drying process of the hydrous crumbs after the above-described dehydration is conducted by the drying barrel section under a reduced pressure.

The degree of pressure reduction of the drying barrel may be appropriately selected, but when it is usually 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, it is preferable, since there is no burning or deterioration of the acrylic rubber, so that the acrylic rubber is efficiently dried and the amount insoluble in methyl ethyl ketone in the acrylic rubber can be reduced.

The number of drying barrels in the screw-type extruder is not particularly limited, but is usually plural, preferably 2 to 10, and more preferably 3 to 8. The degree of pressure reduction in the case of having a plurality of drying barrels may be a degree of pressure reduction similar to that of all the drying barrels, or it may vary by the drying barrel. The set temperature in the case of having multiple drying barrels may be similar to that of all the drying barrels or it may vary by the drying barrel, but when the temperature of the discharge portion (closer to the die) is set higher than the temperature of the introduction portion (closer to the dehydration barrel), it is preferable, since the drying efficiency can be increased.

The water content of the dried rubber after drying is usually less than 1% by weight, preferably 0.8% by weight or less, and more preferably 0.6% by weight or less. In the method for producing of the present invention, it is particularly preferable that the dry rubber is melted and extruded while the water content of the dry rubber takes this value (a state in which water is almost removed) in the screw-type extruder, since the amount of gel insoluble in methyl ethyl ketone of the acrylic rubber can be reduced.

Shape of the Acrylic Rubber (Die section)

The dry rubber dehydrated/dried by the screw portions of the dehydration barrel and the drying barrel is sent to a screwless straightening die section provided near the tip of the screw-type extruder. A breaker plate or a wire net may or may not be provided between the screw portion and the die section.

The dry rubber extruded from the die section of the screw-type extruder can be in various shapes such as a granular shape, a pellet shape, a columnar shape, a round bar shape and a band shape depending on the nozzle shape of the die.

The resin pressure in the die section is not particularly limited, but when the resin pressure is usually in the range of 0.1 to 10 MPa, preferably 0.5 to 5 MPa, and more preferably 1 to 3 MPa, it is preferable, since air entrapment in the rubber is small (specific gravity of the rubber is large) and the productivity is excellent.

Screw-Type Extruder and Operating Conditions

The screw length (L) of the screw-type extruder used may be appropriately selected according to the purpose of use, but it is usually in the range of 3,000 to 15,000 mm, preferably 4,000 to 10,000 mm, more preferably 4,500 to 8,000 mm.

The screw diameter (D) of the screw-type extruder used may be appropriately selected according to the purpose of use, but it is usually in the range of 50 to 250 mm, preferably 100 to 200 mm, more preferably 120 to 160 mm.

The ratio (L / D) of the screw length (L) to the screw diameter (D) of the screw-type extruder used may be appropriately selected, but when it is usually in the range of 10 to 100, preferably 20 to 80, more preferably 30 to 60, particularly preferably 40 to 50, it is preferable, since the water content can be less than 1% by weight without lowering the molecular weight of the dried rubber or causing burns.

When the rotation speed (N) of the screw-type extruder is usually in the range of 10 to 1,000 rpm, preferably 50 to 750 rpm, more preferably 100 to 500 rpm, most preferably 120 to 300 rpm, it is preferable, since the water content and gel amount of the acrylic rubber can be efficiently reduced.

The extrusion rate (Q) of the screw-type extruder to be used is usually in the range of 100 to 1,500 kg/hr, preferably 300 to 1,200 kg/hr, more preferably 400 to 1,000 kg/hr, most preferably 500 to 800 kg/hr.

The ratio (Q / N) of the extrusion rate (Q) and the number of revolutions (N) of the screw-type extruder to be used is usually in the range of 2 to 10, preferably 3 to 8, more preferably 4 to 6, it is preferable, since the strength properties, the processability and the productivity in production of the acrylic rubber are highly well-balanced.

The acrylic rubber thus obtained is excellent in processability, strength properties, and water resistance. The shape of the acrylic rubber obtained is not particularly limited, but it can be for example crumb-shaped, powder-shaped, rod-shaped, sheet-shaped, or bale-shaped, but the sheet-shaped or bale-shaped is preferable, since it is excellent in processability, strength properties, and water resistance and is also remarkably excellent in workability and storage stability.

Sheet-shaped or Bale-shaped Acrylic Rubber

The sheet-shaped acrylic rubber can be obtained by extruding the sheet-shaped dry rubber by making the die section of the screw-type extruder into a substantially rectangular shape and then cooling and cutting the rubber as required. The bale-shaped acrylic rubber can be obtained by laminating the obtained sheet-shaped acrylic rubber, though there is no particular limitation in the method for obtaining the bale-shaped acrylic rubber. Both of the sheet-shaped acrylic rubber and the bale-shaped acrylic rubber have better workability than crumb-shaped acrylic rubber and have less air entrapment (higher specific gravity) and are overwhelmingly excellent in storage stability, which is preferable.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since it has excellent workability and productivity. In particular, since the thermal conductivity of the sheet-shaped dry rubber is as low as 0.15 to 0.35 W/mK, in order to increase the cooling efficiency and to improve the productivity remarkably, the thickness of the sheet-shaped dry rubber is usually in the range of 1 to 30 mm, preferably 2 to 25 mm, more preferably 3 to 15 mm, and particularly preferably 4 to 12 mm.

The width of the sheet-shaped dry rubber extruded from the screw-type extruder is appropriately selected according to the purpose of use, but it is usually in the range of 300 to 1,200 mm, preferably 400 to 1,000 mm, more preferably 500 to 800 mm.

The temperature of the sheet-shaped dry rubber extruded from the screw-type extruder is not particularly limited, but it is usually in the range of 100 to 200°C, preferably 110 to 180°C, more preferably 120 to 160°C.

The water content of the dry rubber extruded from the screw-type extruder is not particularly limited, but it is usually less than 1% by weight, preferably 0.8 by weight or less, more preferably 0.6% by weight or less.

The complex viscosity ([η] 100°C) at 100°C of the sheet-shaped dry rubber extruded from the screw-type extruder is not particularly limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, when the value of the complex viscosity ([η] 100°C) at 100°C is higher than the lower limit or higher, the extrudability can be more excellent, and when the value is lower than the upper limit or lower, collapse and breakage of the shape of the sheet-shaped dry rubber can be suppressed.

The sheet-shaped dry rubber extruded from the screw-type extruder can be used by folding as it is, but it can usually be cut and used.

The cutting of the sheet-shaped dry rubber is not particularly limited, but since the acrylic rubber of the present invention has strong stickiness, it is preferable that the sheet-shaped dry rubber is cut after cooling the same in order to continuously cut without entrapping air.

The cutting temperature of the sheet-shaped dry rubber is not particularly limited, but when the temperature is usually 60°C or lower, preferably 55°C or lower, more preferably 50°C or lower, it is preferable, since the cutting property and the productivity are highly well-balanced.

The complex viscosity ([η] 60°C) at 60°C of the sheet-shaped dry rubber is not particularly limited, but when it is usually in the range of 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ([η] 100°C / [η] 60°C) of the complex viscosity ([η] 100°C) at 100°C to the complex viscosity ([η] 60°C) at 60°C of the sheet-shaped dry rubber is not particularly limited and can be appropriately selected according to the purpose of use, but when it is usually 0.5 or more, preferably 0.6 or more, more preferably 0.7 or more, particularly preferably 0.8 or more, most preferably 0.85 or more, and the upper limit value is usually 0.98 or less, preferably 0.97 or less, more preferably 0.96 or less, particularly preferably 0.95 or less, most preferably 0.93 or less, it is preferable, since air entrapment is low, and cutting and productivity are highly well-balanced.

The method for cooling the sheet-shaped dry rubber is not particularly limited and may be left at room temperature. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air cooling method under ventilation or cooling is particularly preferable.

By the air-cooling method for sheet-shaped dry rubbers, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not particularly limited, but is usually in the range of 0 to 25°C, preferably 5 to 25°C, more preferably 10 to 20°C. The length to be cooled is not particularly limited, but it is usually in the range of 5 to 500 m, preferably 10 to 200 m, more preferably 20 to 100 m. Although the cooling rate of the sheet-shaped dry rubber is not particularly limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber is not particularly limited and may be appropriately selected according to the purpose of use, but it is usually in the range of 100 to 800 mm, preferably 200 to 500 mm, more preferably 250 to 450 mm.

The sheet-shaped acrylic rubber thus obtained is excellent in operability, storage stability, processability, strength properties, water resistance, and compression set resistance as compared with crumb-shaped acrylic rubber, and can be used as it is or can be used by laminating and baling.

Laminating Process

The method for producing a bale-shaped acrylic rubber of the present invention is not particularly limited, but by laminating the above-mentioned sheet-shaped dry rubber (sheet-shaped acrylic rubber), an acrylic rubber bale having little entrapment of air and excellent in storage stability can be obtained, which is preferable.

The lamination temperature of the sheet-shaped dry rubber is not particularly limited, but when it is usually 30°C or higher, preferably 35°C or higher, more preferably 40°C or higher, it is preferable, since air entrapped during lamination can be released. The number of laminated layers may be appropriately selected according to the size or weight of the bale-shaped acrylic rubber. The bale-shaped acrylic rubber of the present invention is integrated by the own weight of the laminated sheet-shaped dry rubber.

The bale-shaped acrylic rubber of the present invention thus obtained is excellent in operability and storage stability as compared with crumb-shaped acrylic rubber, and is excellent in processability, strength properties, water resistance, and compression set resistance, and the bale-shaped acrylic rubber can be used by putting into a mixer such as a Banbury mixer or a roll as it is or after being cut into a required amount.

<Rubber Composition>

The rubber composition of the present invention is characterized by that it contains a rubber component containing the above-mentioned acrylic rubber, a filler and a cross-linking agent. The content of the acrylic rubber of the present invention in the rubber component may be appropriately selected according to the purpose of use of the rubber composition, and it is, for example, usually 30% by weight or more, preferably 50% by weight or more, more preferably 70% by weight or more.

The acrylic rubber of the present invention alone or a combination of the above acrylic rubber and other rubber can be used as the rubber component.

Other rubbers to be combined with the acrylic rubber of the present invention are not particularly limited, and examples thereof include acrylic rubber other than the above acrylic rubber, natural rubber, polybutadiene rubber, polyisoprene rubber, styrene-butadiene rubber, acrylonitrile-butadiene rubber, silicone rubber, fluororubber, olefin elastomers, styrene elastomers, vinyl chloride elastomers, polyester elastomers, polyamide elastomers, polyurethane elastomers, polysiloxane elastomers, and the like.

These other rubbers may be used alone or in combination of two or more. The shape of these other rubbers may be a bale, a sheet, a powder, or the like. The content of the other rubbers in the rubber component is appropriately selected within a range that does not impair the effects of the present invention, and it is, for example, usually 70% by weight or less, preferably 50% by weight or less, more preferably 30% by weight or less.

The filler is not particularly limited, but examples thereof include a reinforcing filler and a non-reinforcing filler, and the reinforcing filler is preferably used. Examples of the reinforcing filler include: carbon black such as furnace black, acetylene black, thermal black, channel black and graphite; silica such as wet silica, dry silica and colloidal silica; and the like, while examples of non-reinforcing fillers include quartz powder, diatomaceous earth, zinc white, basic sodium carbonate, activated calcium carbonate, sodium silicate, aluminum silicate, titanium dioxide, talc, aluminum sulfate, calcium sulfate, barium sulfate, and the like.

These fillers can be used alone or in combination of two or more, and the compounding amount thereof, which is not particularly limited, is usually in the range of 1 to 200 parts by weight, preferably 10 to 150 parts by weight, more preferably 20 to 100 parts by weight, with respect to 100 parts by weight of the rubber component.

The cross-linking agent is not particularly limited, but conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; quaternary onium salts; imidazole compounds; isocyanuric acid compounds; organic peroxide; triazine compounds; and the like can be used. Among these, the polyvalent amine compounds and the triazine compounds are preferable, and the polyvalent amine compounds are particularly preferable.

Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p-phenylenediisopropylidene) dianiline, 2,2'-bis [4-(4-aminophenoxy) phenyl] propane, 4,4'-diaminobenzanilide, 4,4'-bis (4-aminophenoxy) biphenyl, m-xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable. These polyvalent amine compounds are preferably used particularly in combination with the acrylic rubber containing a carboxyl group.

Examples of the triazine compound include 6-trimercapto-s-triazine, 2-anilino-4,6-dithiol-s-triazine, 1-dibutylamino-3,5-dimercaptotriazine, 2-dibutylamino-4, 6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, the triazine compounds are preferably used particularly in combination with the acrylic rubber containing a halogen group.

These cross-linking agents may be used alone or in combination of two or more, and the compounding amount thereof with respect to 100 parts by weight of the rubber component is usually in the range of 0.001 to 20 parts by weight, preferably 0.1 to 10 parts by weight, more preferably 0.1 to 5 parts by weight. By setting the amount of the cross-linking agent to be in this range, it is possible to make the rubber elasticity sufficient while making the mechanical strength as the rubber cross-linked product excellent, which is preferable.

The rubber composition of the present invention may further contain an anti-aging agent, if necessary. The anti-aging agent is not particularly limited, but examples thereof include: phenolic anti-aging agents such as 2,6-di-t-butyl-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl) propionate, styrenated phenol, 2,2'-methylene-bis(6-$\alpha$-methyl-benzyl-p-cresol), 4,4'-methylenebis (2,6-di-t-butylphenol), 2,2'-methylene-bis(4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type anti-aging agents such as tris (nonylphenyl) phosphite, diphenylisodecylphosphite, tetraphenyldipropyleneglycol diphosphite; sulfur ester-based anti-aging agents such as dilauryl thiodipropionate;

amine-based anti-aging agents such as phenyl-$\alpha$-naphthylamine, phenyl-$\beta$-naphthylamine, p-(p-toluenesulfonyla-mide)-diphenylamine, 4,4'-($\alpha,\alpha$-dimethylbenzyl) diphenylamine, N,N-diphenyl-p-phenylenediamine, N-isopropyl-N'-phenyl-p-phenylenediamine and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable.

These anti-aging agents can be used alone or in combination of two or more, and the compounding amount thereof with respect to 100 parts by weight of the acrylic rubber component is in the range of 0.01 to 15 parts by weight, preferably 0.1 to 10 parts by weight, more preferably 1 to 5 parts by weight.

The rubber composition of the present invention contains the above rubber component, a filler, a cross-linking agent, and, if necessary, an anti-aging agent, and may further optionally contain, if necessary, other additives commonly used in the art, for example, a cross-linking aid, a cross-linking accelerator, a cross-linking retarder, a silane coupling agent, a plasticizer, a processing aid, lubricants, pigments, colorants, antistatic agents, foaming agents and the like. These other compounding agents may be used alone or in combination of two or more, and the compounding amount thereof is appropriately selected within a range that does not degrade the effects of the present invention.

Examples of the means for mixing to prepare the rubber composition of the present invention include any means conventionally used in the field of rubber processing, such as an open roll, a Banbury mixer, various kneaders, and the like can be used. The preferred mixing procedure is, for example, to sufficiently mix components that are difficult to react or decompose with heat, and then to mix a cross-linking agent or the like, which is a component that easily reacts or decomposes with heat, for a short time at a temperature that reaction and decomposition does not occur.

<Rubber Cross-linked Product>

The rubber cross-linked product of the present invention is obtained by cross-linking the above rubber composition.

The rubber cross-linked product of the present invention can be produced by molding the rubber composition of the present invention by a molding machine applicable for a desired shape, for example, an extruder, an injection molding machine, a compressor or a roll, occurring a cross-linking reaction by heating, and fixing the shape as a rubber cross-linked product. In this case, the molding may be performed in advance and then cross-linked, or the molding and the cross-linking may be performed simultaneously.

The molding temperature is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a known method used for cross-linking rubber such as press heating, steam heating, oven heating, and hot air heating may be appropriately selected.

The rubber cross-linked product of the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product of the present invention has excellent processability and water resistance while maintaining basic properties such as tensile strength, elongation, and hardness as a rubber.

Taking advantage of the above-mentioned properties, a rubber cross-linked product of the present invention is preferably used as: for example, sealing materials such as an O-ring, a packing, a diaphragm, an oil seal, a shaft seal, a bearing seal, a mechanical seal, a well head seal, an electric/electronic device seal, an air compression device; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials; anti-vibration materials; electric wire coating materials; industrial belts; tubes and hoses; sheets; and the like.

The rubber cross-linked product of the present invention is also used as an extrusion-molded product and mold cross-linked product used for automobiles, for example, fuel oil system hoses for fuel tank such as a fuel hose, a filler neck hose, a vent hose, a vapor hose, an oil hose, and the like; air system hoses such as a turbo air hose, a mission control hose, and the like; various hoses such as a radiator hose, a heater hose, a brake hose, an air conditioner hose, and the like.

<Device Configuration used for Production of Acrylic Rubber >

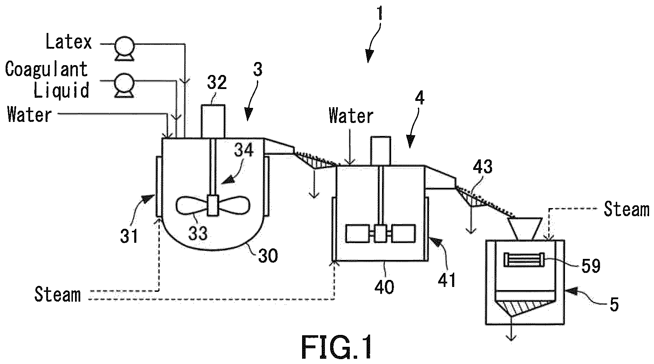

Next, a device configuration used for manufacturing the acrylic rubber according to one embodiment of the present invention will be described. FIG. 1 is a diagram schematically showing an example of an acrylic rubber production system having a device configuration used for producing an acrylic rubber according to one embodiment of the present invention. For producing the acrylic rubber of the present invention, for example, the acrylic rubber production system 1 shown in FIG. 1 can be used.

The acrylic rubber production system shown in FIG. 1 is composed of an emulsion polymerization reactor (not shown), a coagulation device 3, a washing device 4, a drainer 43, and a screw-type extruder 5.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and a sulfuric acid emulsifier are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid. The emulsion polymerization reactor may be a batch type, a semi-batch type or a continuous type, and may be a tank-type reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and the rotation speed of the stirring blade 33. In the coagulation device 3, a hydrous crumb can be produced by bringing the emulsion polymerization liquid obtained in the emulsion polymerization reactor into contact with a sodium salt aqueous solution as a coagulant to coagulate the emulsion polymerization liquid.

In the coagulation device 3, for example, the contact between the emulsion polymerization liquid and the sodium salt is performed by adding the emulsion polymerization liquid to the stirred sodium salt aqueous solution. This means that the stirring tank 30 of the coagulation device 3 is filled with the sodium salt aqueous solution, and the emulsion polymerization liquid is added to and brought into contact with the sodium salt aqueous solution to coagulate the emulsion polymerization liquid, thereby generating a hydrous crumb.

The heating unit 31 of the coagulation device 3 is configured to heat the sodium salt aqueous solution with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer. The temperature of the sodium salt aqueous solution in the stirring tank 30 is controlled by the temperature control unit to be usually in the range of 40°C or higher, preferably 40 to 90°C, more preferably 50 to 80°C.

The stirring device 34 of the coagulation device 3 is configured to stir the sodium salt aqueous solution filled in the stirring tank 30. Specifically, the stirring device 34 includes a motor 32 that generates rotational power, and a stirring blade 33 that extends in a direction perpendicular to the rotation axis of the motor 32. The stirring blades 33 can rotate the sodium salt aqueous solution filled in the stirring tank 30 about the rotation axis by the rotation power of the motor 32 to flow the sodium salt aqueous solution. The shape and size of the stirring blade 33, the number of installations, and the like are not particularly limited.

The drive control unit of the coagulation device 3 is configured to control the rotational drive of the motor 32 of the stirring device 34 and set the rotation speed of the stirring blades 33 of the stirring device 34 to predetermined values. The stirring speed of the stirring blade 33 is controlled by the drive controller so that the stirring speed of the sodium salt aqueous solution is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the sodium salt aqueous solution is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the sodium salt aqueous solution is usually 50 m/s or lower, preferably 30 m/s or lower, more preferably 25 m/s or lower, and most preferably 20 m/s or lower.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained acrylic rubber can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumb washed in the washing device 4 is supplied to the screw-type extruder 5 which performs a dehydration process and a drying process. At this time, it is preferable that the hydrous crumb after washing is supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. For example, by setting the temperature of water used for washing in the washing device 4 to 60°C or higher (for example, 70°C), so that the temperature of the hydrous crumb when supplied to the screw-type extruder 5 is maintained at 60°C or higher. Otherwise, the hydrous crumb may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dried rubber.

The screw-type extruder 5 shown in FIG. 1 is configured to perform the processes related to the aforementioned dehydration process and the drying process. Although a screw-type extruder 5 is illustrated in FIG. 1 as a suitable example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dried rubber obtained through the dehydration process and the drying process into a predetermined shape and to discharge the dried rubber. Specifically, the screw-type extruder 5 is provided with: a dehydration barrel section 53 having a function as a dehydrator to dehydrate the hydrous crumb washed by the washing device 4; a drying barrel section 54 having a function as a dryer for drying the hydrous crumb; and a die 59 having a molding function to mold a hydrous crumb on the downstream side of the screw-type extruder 5.

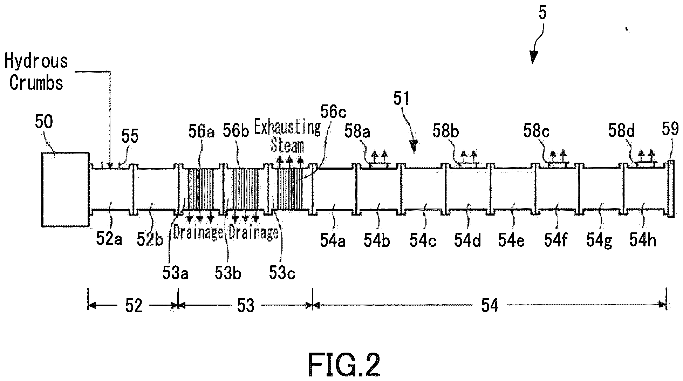

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder/dryer including a pair of screws (not shown) in a barrel section 51. The screw-type extruder 5 has a drive unit 50 that rotationally drives a pair of screws in the barrel section 51. The drive unit 50 is attached to an upstream end (left end in FIG. 2) of the barrel section 51. Further, the screw-type extruder 5 has a die 59 at a downstream end (right end in FIG. 2) of the barrel section 51.

The barrel section 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel section 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, 54a to 54h. As such a heating means, for example, a configuration in which high temperature steam is supplied from a steam supply means to a steam distribution jacket formed in each barrel 52a to 52b, 53a to 53c, 54a to 54h is adopted, but the configuration is not limited to this. Further, the screw-type extruder 5 has a temperature control means (not shown) to control the set temperature of each heating means corresponding to each barrel 52a to 52b, 53a to 53c, 54a to 54h.

It should be noted that the number of supply barrels, dehydration barrels, and drying barrels constituting the barrel sections 52, 53, and 54 of the barrel section 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated. Further, the number of the drying barrels installed in the drying barrel section 54 is, for example, preferably 2 to 10, and more preferably 3 to 8.

The pair of screws in the barrel section 51 is rotationally driven by a driving means such as a motor stored in the driving unit 50. The pair of screws, extending from the upstream side to the downstream side in the barrel section 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel section 51. The first supply barrel 52a of the supply barrel section 52 has a feed port 55 provided therewith for supplying the hydrous crumbs into the barrel section 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b, 56c are formed in each of the dehydration barrels 53a to 53c.

The slit width of each dehydration slit 56a, 56b, 56c, that is, the opening may be appropriately selected according to the use conditions, and is usually 0.01 to 5 mm. From the viewpoint that the loss of the hydrous crumb is small and the dehydration of hydrous crumb can be efficiently performed, it is preferably 0.1 to 1 mm, more preferably 0.2 to 0.6 mm.

There are two cases to remove water from the hydrous crumbs in the dehydration barrels 53a to 53c of the dehydration barrel section 53, which are a case to remove water in a liquid form from each of the dehydration slits 56a, 56b and 56c and to a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash content in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, for example, when the dehydration barrel section 53 has four dehydration barrels, a mode in which, for example, three upstream dehydration barrels perform drainage and one downstream dehydration barrel performs steam exhausting can be considered. On the other hand, in the case of reducing the water content, it is advantageous to increase the number of dehydration barrels for steam exhausting.

The set temperature of the dehydration barrel section 53 is usually in the range of 60 to 150°C, preferably 70 to 140°C, and more preferably 80 to 130°C, as described in the dehydration/drying process above. The set temperature of the dehydration barrel for dehydration in the drainage state is usually in the range of 60 to 120°C, preferably 70 to 110°C, more preferably 80 to 100°C, and the set temperature of the dehydration barrel for dehydration in the steam exhausting state is usually in the range of 100 to 150°C, preferably 105 to 140°C, more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c, 58d for deaeration, respectively. A vent pipe (not shown) is connected to each of the vent ports 58a, 58b, 58c, 58d.

A vacuum pump (not shown) is connected to the end of each vent pipe, and the inside of the drying barrel section 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, and more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel section 51 and has a discharge port having a predetermined nozzle shape. The acrylic rubber dried in the drying barrel section 54 passes through the discharge port of the die 59 to be extruded into a shape corresponding to the predetermined nozzle shape. The acrylic rubber passing through the die 59 is formed into various shapes such as a granular shape, a columnar shape, a round bar shape, and a sheet shape depending on the nozzle shape of the die 59. A breaker plate or a wire net may or may not be provided between the screw and the die 59.

The hydrous crumbs of acrylic rubber obtained through the washing process is supplied to the supply barrel section 52 from the feed port 55. The hydrous crumb supplied to the supply barrel section 52 is sent from the supply barrel section 52 to the dehydration barrel section 53 by rotation of a pair of screws in the barrel section 51. In the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 is sent to the drying barrel section 54 by rotation of a pair of screws in the barrel section 51. The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not shown) connected to the vent ports 58a, 58b, 58c, 58d.

By passing through the drying barrel section 54 as described above, the hydrous crumbs are dried to become a melt of acrylic rubber, so that the acrylic rubber is supplied to the die 59 by the rotation of a pair of screws in the barrel section 51, to be formed into a sheet shape, is extruded from the die 59.

Hereinafter, an example of operating conditions of the screw-type extruder 5 according to the present embodiment will be described.

The rotation speed (N) of the pair of screws in the barrel section 51 may be appropriately selected according to various conditions, and is usually 10 to 1,000 rpm, and since the water content of the acrylic rubber and the gel amount can be efficiently reduced, the rotation speed (N) of the pair of screws in the barrel section 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, and more preferably 3 to 8, and particularly preferably 4 to 6.

As described above, the dry rubber discharged from the screw-type extruder 5 is extruded into various shapes such as a granular shape, a columnar shape, a round bar shape and a sheet shape depending on the nozzle shape of the die 59. Hereinafter, as an example of the cooling device 6, a transport-type cooling device 60 that cools the sheet-shaped dried rubber 10 will be described with reference to FIG. 3.

[EXAMPLES]

The present invention will be described more specifically below with reference to Examples and Comparative Examples. In addition, "part", "%" and "ratio" in each example are based on weight unless otherwise specified. Various physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following test method. Further, the content ratio of each monomer unit in the acrylic rubber was calculated from the amount of each monomer used in the polymerization reaction and the polymerization conversion rate. Specifically, the content ratio of each monomer unit was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group in the acrylic rubber was measured by the following method:

(1) The amount of carboxyl group was calculated by dissolving the acrylic rubber in acetone and performing potentiometric titration with a potassium hydroxide solution.
(2) The amount of epoxy groups was calculated by dissolving the acrylic rubber in methyl ethyl ketone, adding a specified amount of hydrochloric acid thereto to react with epoxy groups, and titrating the amount of residual hydrochloric acid with potassium hydroxide.

(3) The amount of chlorine was calculated by completely burning the acrylic rubber in a combustion flask, absorbing the generated chlorine in water, and titrating with silver nitrate.

[Ash Content]

The ash content (%) contained in the acrylic rubber was measured according to JIS K6228 A method.

[Ash Component Content]

The amount of each of the components (ppm) in the ash of the acrylic rubber was measured by XRF using a ZSX Primus (manufactured by Rigaku Corporation) by pressing the ash collected during the above-mentioned ash content measurement onto a titration filter paper having a diameter of 20 mm.

[Gel Amount]

The gel amount (%) of the acrylic rubber is the amount of insoluble matter in methyl ethyl ketone, and was determined by the following method:
About 0.2 g of acrylic rubber sheet was weighed (X g), immersed in 100 ml of methyl ethyl ketone, left at room temperature for 24 hours, and then a filtrate obtained by filtering out the insoluble matter in methyl ethyl ketone using an 80 mesh wire net, that is, a filtrate in which only the rubber component soluble in methyl ethyl ketone was dissolved. The dry solid content (Y g) obtained by evaporating and drying and coagulating the filtrate was dissolved was weighed and calculated by the following formula.

$$\text{Gel amount (\%)} = 100 \times (X\text{-}Y) / X$$

[Specific Gravity]

The specific gravity of the acrylic rubber was measured in accordance with the method A of JIS K6268 cross-linked rubber - density measurement.

[Glass Transition Temperature (Tg)]

The glass transition temperature (Tg) of the acrylic rubber was measured using a differential scanning calorimeter (DSC, product name "X-DSC7000", manufactured by Hitachi High-Tech Science Corporation).

[pH]

The pH was measured with a pH electrode after dissolving 6 g ($\pm$ 0.05 g) of acrylic rubber in 100 g of tetrahydrofuran and adding 2.0 ml of distilled water to confirm that the acrylic rubber was completely dissolved.

[Water Content]

The water content (%) was measured according to JIS K6238-1: Oven A (volatile content measurement) method.

[Molecular Weight and Molecular Weight Distribution]

The weight average molecular weight (Mw) and the molecular weight distribution (Mz / Mw) of the acrylic rubber are an absolute molecular weight and an absolute molecular weight distribution, respectively, measured by the GPC-MALS method in which a solution in which 0.05 mol / L of lithium chloride and 37% concentrated hydrochloric acid with a concentration of 0.01% are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and the difference in the refractive index of the molecular chain solution size-separated were measured by the GPC device by following the elution time, so that the molecular weight of the solute and its content rate were sequentially calculated and determined. The measurement conditions and the measurement method by the GPC device are as follows:

Column: TSKgel α-M 2 pieces (φ7.8 mm×30 cm, manufactured by TOSOH CORPORATION)
Column temperature: 40°C
Flow rate: 0.8 ml/mm
Sample preparation: 5 ml of solvent was added to 10 mg of the sample, and the mixture was gently stirred at room temperature (dissolution was visually confirmed). Thereafter, filtration was performed using a 0.5 μm filter.

[Complex Viscosity]

The complex viscosity η at each temperature of the acrylic rubber was determined by measuring the temperature dispersion (40 to 120°C) at a strain of 473% and 1 Hz using a dynamic viscoelasticity measuring device "Rubber Process Analyzer RPA-2000" (manufactured by Alpha Technology Co., Ltd.). Here, of the above-mentioned dynamic viscoelasticities, the dynamic viscoelasticity at 60°C is defined as the complex viscosity η (60°C), and the dynamic viscoelasticity at 100°C is defined as the complex viscosity η (100°C), and the values η (100°C) / η (60°C) and η (60°C) / η (100°C) were calculated.

[Moonie Viscosity (ML1+4,100°C)]

The Mooney viscosity (ML1+4,100°C) of the acrylic rubber was measured according to the JIS K6300 uncross-linked rubber physical test method.

[Processability Evaluation]

The processability of the acrylic rubber was measured by adding the acrylic rubber to a Banbury mixer heated to 50°C, kneading for 1 minute, and then adding the compounding agent A having the composition of the rubber composition shown in Table 1 to obtain the first-stage rubber composition. The time until the first-stage rubber composition was integrated to show the maximum torque value, that is, BIT (Black Incorporation Time) was measured and evaluated by an index with Comparative Example 1 being 100 (the smaller the index, the better the processability).

[Storage Stability Evaluation]

Regarding the storage stability of the acrylic rubber, the rubber sample was put into a constant temperature and humidity chamber of 45°C × 80% RH (SH-222 manufactured by ESPEC CORP.), and the change rate of water content before and after the 7-day test was calculated, and the processability (BIT) of the acrylic rubber before and after putting into the constant temperature and humidity chamber, and calculated the change ratio of the BIT, and the evaluation was made by an index where Comparative Example 1 being 100 (the smaller the index, the better the storage stability).

[Water Resistance Evaluation]

Regarding the water resistance of the acrylic rubber, the cross-linked product of the acrylic rubber was immersed in a distilled water at a temperature of 85°C for 100 hours in accordance with JIS K6258 to perform an immersion test, and the volume change rate before and after immersion was calculated according to the following formula: The evaluation was performed by an index with Comparative Example 1 being 100 (the smaller the index, the more excellent the water resistance).

$$\text{Volume change rate before and after immersion (\%)} = ((\text{test piece volume after immersion} - \text{test piece volume before immersion}) / \text{test piece volume before immersion}) \times 100.$$

[Normal Physical Property Evaluation]

The normal physical properties of the acrylic rubber were evaluated according to JIS K6251 by measuring the breaking strength, 100% tensile stress and breaking elongation of the rubber cross-linked product of the acrylic rubber, and were evaluated based on the following criteria:

(1) The breaking strength was evaluated as ◎, good, for 10 MPa or more and as ×, unacceptable, for less than 10 MPa.
(2) For 100% tensile stress, 5 MPa or more was evaluated as ◎ and less than 5 MPa was evaluated as ×.

(3) The breaking elongation was evaluated as ◎ for 150% or more and as × for less than 150%.

[Example 1]

46 parts of pure water, 48.5 parts of ethyl acrylate, 29 parts of n-butyl acrylate, 21 parts of methoxyethyl acrylate, 1.5 parts of vinyl acetate, together with 0.709 parts of sodium lauryl sulfate and 1.82 parts of polyoxyethylene dodecyl ether (molecular weight 1500) as emulsifiers were mixed in a mixing container provided with a homomixer, and stirred, thereby to obtain a monomer emulsion.

Subsequently, 170 parts of pure water and 3 parts of the monomer emulsion obtained as mentioned above were put into a polymerization reaction tank provided with a thermometer and a stirrer, and cooled to 12°C under a nitrogen stream. The rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction, and the emulsion polymerization liquid was obtained.

In a coagulation tank provided with a thermometer and a stirring device, 2% sodium sulfate aqueous solution (coagulant liquid) was heated to 80°C and vigorously stirred (rotation speed of 600 rpm, peripheral speed of 3.1 m/s). The obtained above emulsion polymerization liquid heated to 80°C was continuously added to the sodium sulfate aqueous solution, so that the polymer was coagulated, and filtered to obtain the hydrous crumbs.

Subsequently, 194 parts of hot water (70°C) was added to the coagulation tank, and the mixture was stirred for 15 minutes, and then water was discharged, and again 194 parts of hot water (70°C) was added and the mixture was stirred for 15 minutes to wash the hydrous crumbs. The washed hydrous crumbs (the temperature of the hydrous crumbs 65°C) was supplied to the screw-type extruder, dehydrated, dried, and the acrylic rubber (A) was extruded.

The screw-type extruder used in this Example 1 is constituted by one feed barrel, three dehydration barrels (first to third dehydration barrels), and five drying barrels (first to fifth drying barrels). The first and the second dehydration barrels are configured to perform drainage, while the third dehydration barrel is configured to perform steam exhausting. The operating conditions of the screw-type extruder were as follows.

Water Content:

- Water content of hydrous crumbs after drainage in the second dehydration barrel: 20%
- Water content of hydrous crumbs after steam exhausting in the third dehydration barrel: 10%
- Water content of hydrous crumbs after drying in the fifth drying barrel: 0.4% Rubber Temperature:
- Temperature of the hydrous crumbs supplied to the supply barrel: 65°C
- Temperature of the rubber discharged from the screw-type extruder: 140°C

Set Temperature of Each Barrel:

- First dehydration barrel: 90°C
- Second dehydration barrel: 100°C
- Third dehydration barrel: 120°C
- First drying barrel: 120°C
- Second drying barrel: 130°C
- Third drying barrel: 140°C
- Fourth drying barrel: 160°C
- Fifth drying barrel: 180°C

Operating Conditions:

- Screw diameter (D) in the barrel section: 132 mm
- Total length of screw (L) in the barrel section: 4620 mm
- L/D: 35
- Screw rotation speed in the barrel section: 135 rpm
- Extrusion rate of rubber from die: 700 kg / hr
- Resin pressure of the die: 2 MPa

Reactive group content, ash content, ash component content, specific gravity, gel amount, glass transition temperature (Tg), pH, water content, molecular weight, molecular weight distribution, complex viscosity, and Mooney viscosity (ML1+4,100°C) of the acrylic rubber (A) thus obtained were measured and shown in Table 2. The value of "water content (%) after dehydration (drainage)" shown in the dehydration process column of Table 2 is the water content of the hydrous crumbs immediately after drainage by the drainage type dehydration barrel (immediately before the steam exhausting type of dehydration barrel).

Next, using a Banbury mixer, 100 parts of acrylic rubber (A) and the compounding agent A of "Composition 1" shown in Table 1 were added and mixed at 50°C for 5 minutes. At this time, the processability of acrylic rubber was evaluated, and the results are shown in Table 2. Then, the obtained mixture was transferred to a roll at 50°C, and the compounding agent B of "Composition 1" was mixed to obtain a rubber composition.

[Table 1]

| Combination of acrylic rubber mixture | | | | |
|---|---|---|---|---|
| Reactive Group | | Halogen Group | Epoxy Group | Carboxyl Group |
| Composition (Parts) | | Composition 1 | Composition 2 | Composition 3 |
| Compounding Agent A | Acrylic Rubber | 100 | 100 | 100 |
| | SEAST3(HAF) ※1 | 60 | 60 | 60 |
| | Stearic Acid | 1 | 1 | 1 |
| | Ester Wax | 1 | 1 | 1 |
| | NOCRAC CD ※2 | 2 | 2 | 2 |
| Compounding Agent B | Hexamethylenediamine carbamate | - | - | 0.5 |
| | Rhenogran®XLA-60 ※3 (Synthetic mixture of active amine and retarder) | - | - | 2 |
| | Ammonium benzoate | - | 1.5 | - |
| | Zinc dibutyldithiocarbamate | 1.5 | - | - |
| | 2,4,6-Trimercapto-s-triazine | 0.5 | - | - |
| | N- (cyclohexylthio) phthalimide | 0.2 | - | - |
| | Diethylthiourea | 0.3 | - | - |
| ※1: SEAST3 (HAF) in the table is carbon black (made by Tokai Carbon Co., Ltd.). | | | | |
| ※2: The Nocrac CD in the table is 4,4'-bis ($\alpha$, $\alpha$-dimethylbenzyl) diphenylamine : made by OUCHI SHINKO CHEMICAL INDUSTRIAL CO.,LTD.). | | | | |
| ※3: Rhenogran® XLA-60 in the table is a vulcanization accelerator (made by LANXESS CO.,LTD.). | | | | |

The obtained rubber composition was placed in a mold having a length of 15 cm, a width of 15 cm, and a depth of 0.2 cm, and was primary cross-linked by pressing at 180°C for 10 minutes while pressurizing at a pressing pressure of 10 MPa, and then the obtained primary cross-linked product was further heated in a gear oven at 180°C for 2 hours for secondary cross-linking, to obtain a sheet-shaped rubber cross-linked product. Then, a 3 cm × 2 cm × 0.2 cm test piece was cut out from the obtained sheet-shaped rubber cross-linked product, and a water resistance test and a normal physical property evaluation were performed, and the results are shown in Table 2.

[Example 2]

The acrylic rubber (B) was obtained in the same manner as in Example 1, except that the monomer component was changed to 98.5 parts of ethyl acrylate and 1.5 parts of vinyl chloroacetate, and the temperature of the first dehydration barrel of the screw-type extruder was set to 100°C and the temperature of the second dehydration barrel was set to 120°C, and the water content of the hydrous crumbs after drainage in the first dehydration barrel is reduced to 30%, and each property was evaluated. The results are shown in Table 2.

[Example 3]

The acrylic rubber (C) was obtained in the same manner as in Example 2, except that the monomer component was changed to 43 parts of ethyl acrylate, 25 parts of n-butyl acrylate, 26 parts of methoxyethyl acrylate, 2 parts of acrylonitrile and 4 parts of allyl glycidyl ether, and each property (the compounding agent was changed to "Composition 2") was evaluated. The results are shown in Table 2.

[Example 4]

The acrylic rubber (D) was obtained in the same manner as in Example 2, except that that the monomer component was changed to 4.5 parts of ethyl acrylate, 64.5 parts of n-butyl acrylate, 39.5 parts of methoxyethyl acrylate, and 1.5 parts of mono-n-butyl fumarate, and each property (the compounding agent was changed to "Composition 3") was evaluated. The results are shown in Table 2.

[Example 5]

The acrylic rubber (E) was obtained in the same manner as in Example 2 except that the monomer component is changed to 42.2 parts of ethyl acrylate, 35 parts of n-butyl acrylate, 20 parts of methoxyethyl acrylate, 1.5 parts of acrylonitrile, and 1.3 parts of vinyl chloroacetate, and each property was evaluated. The results are shown in Table 2.

[Comparative Example 1]

A 0.7% sodium sulfate aqueous solution was added to an emulsion polymerization liquid (rotation speed 100 rpm, peripheral speed 0.5 m / s) that had been emulsion-polymerized in the same manner as in Example 5 to generate hydrous crumbs, 194 parts of industrial water was added to 100 parts of the generated hydrous crumbs, stirred at 25°C for 5 minutes in the coagulation tank, thereafter the hydrous crumbs was washed four times in which water was discharged from the coagulation tank, and then 194 parts of a sulfuric acid aqueous solution having a pH of 3 was added, stirred at 25°C for 5 minutes, then discharged water from the coagulation tank, further, acid washing was performed once, and 194 parts of pure water was added and pure water washing was performed once, and the washed hydrous crumbs were dried with a hot air drier of 160°C, thereby to obtain the acrylic rubber (F) having a water content of 0.4% by weight. Each property of the obtained acrylic rubber (F) was evaluated and shown in Table 2.

[Reference Example 1]

Processes up to the washing process were carried out in the same manner as in Example 5, and the hydrous crumbs after washing were dried with a hot air dryer at 160°C, to obtain acrylic rubber (G) having a water content of 0.4% by weight. Each property of the obtained acrylic rubber (G) was evaluated and shown in Table 2.

[Table 2]

| | Example 1 | Example 2 | Example 3 | Example 4 | Example 5 | Comparative Example 1 | Reference Example |
|---|---|---|---|---|---|---|---|
| Type of Acrylic Rubber | (A) | (B) | (C) | (D) | (E) | (F) | (G) |
| Reactive group type | Chlorine | Chlorine | Epoxy Group | Carboxyl Group | Chlorine | Chlorine | Chlorine |
| Reactive group content (%) | 0.3 | 0.31 | 0.4 | 0.31 | 0.27 | 0.27 | 0.27 |
| Monomeric unit Composition of Acrylic Rubber (%) | | | | | | | |
| Ethyl acrylate | 48.5 | 98.5 | 43 | 4.5 | 42.2 | 42.2 | 42.2 |
| n-butyl acrylate | 29 | | 25 | 64.5 | 35 | 35 | 35 |
| Methoxyethyl acrylate | 21 | - | 26 | 39.5 | 20 | 20 | 20 |
| Aorylonitrile | - | - | 2 | - | 1.5 | 1.5 | 1.5 |

(continued)

|  | Example 1 | Example 2 | Example 3 | Example 4 | Example 5 | Comparative Example 1 | Reference Example |
|---|---|---|---|---|---|---|---|
| Mono-n-butyl fumarate | - |  | - | 1.5 | - |  | - |
| Allyl glycidyl ether | - | - | 4 | - | - | - | - |
| Chlorovinyl acetate | 1.5 | 1.5 |  | - | 1.3 | 1.3 | 1.3 |
| Emulsifier (Parts) | | | | | | | |
| Lauryl sulfate sodium salt | 0.709 | 0.709 | 0.709 | 0.709 | 0.709 | 0.709 | 0.709 |
| Polyoxyethylene dodecyl ether | 1.82 | 1.82 | 1.82 | 1.82 | 1.82 | 1.82 | 1.82 |
| Coagulation Process | | | | | | | |
| Coagulant | $Na_2SO_4$ | $Na_2SO_4$ | $Na_2SO_4$ | $Na_2SO_4$ | $Na_2SO_4$ | $Na_2SO_4$ | $Na_2SO_4$ |
| Coagulant concentration (%) | 2 | 2 | 2 | 2 | 2 | 0.7 | 2 |
| Method of addition | Lx ↓ | Lx ↓ | Lx ↓ | Lx ↓ | Lx ↓ | Coa ↓ | Lx ↓ |
| Stirring speed (rpm) | 600 | 600 | 600 | 600 | 600 | 100 | 600 |
| Peripheral speed (m/s) | 3.1 | 3.1 | 3.1 | 3.1 | 3.1 | 0.5 | 3.1 |
| Washing Process | | | | | | | |
| Water temperature (°C) | 70 | 70 | 70 | 70 | 70 | 25 | 70 |
| Number of washings | 2 | 2 | 2 | 2 | 2 | 4+1+1 | 2 |
| Dehydration Process | Yes | Yes | Yes | Yes | Yes | No | No |
| Water content (%) after dehydration (drainage) | 20 | 30 | 30 | 30 | 30 | - | - |
| Ash Properties of Acrylic Rubber | | | | | | | |
| Ash Content (%) | 0.064 | 0.083 | 0.082 | 0.085 | 0.090 | 0.285 | 0.185 |
| Ash Content | | | | | | | |
| P (ppm) | 2 | 3 | 4 | 4 | 4 | 15 | 10 |
| Mg (ppm) | 7 | 11 | 12 | 10 | 10 | 10 | 2 |
| Na (ppm) | 265 | 344 | 343 | 354 | 372 | 1390 | 766 |
| Ca (ppm) | 6 | 8 | 18 | 16 | 16 | 20 | 10 |
| S (ppm) | 329 | 417 | 408 | 415 | 456 | 1200 | 911 |
| Na+S (% in ash) | 93 | 91 | 91 | 90 | 92 | 91 | 91 |
| Na/S (ratio) | 0.81 | 0.82 | 0.84 | 0.85 | 0.82 | 1.16 | 0.84 |
| Property Values of Acrylic Rubber | | | | | | | |
| Specific gravity | 1.074 | 1.086 | 1.064 | 1.074 | 1.059 | 0.713 | 0.759 |
| Gel amount (%) | 1.5 | 1.9 | 2.5 | 3.4 | 2.4 | 70.5 | 65.8 |
| Tg (°C) | -30 | -1.5 | -23 | -38 | -29 | -29 | -29 |

(continued)

| | Example 1 | Example 2 | Example 3 | Example 4 | Example 5 | Comparative Example 1 | Reference Example |
|---|---|---|---|---|---|---|---|
| pH | 4.3 | 3.9 | 4.4 | 46 | 4.5 | 3.1 | 4.5 |
| Water content (%) | 0.4 | 0.4 | 0.4 | 0.3 | 0.4 | 0.4 | 0.4 |
| Mw/1000 | 1420 | 1520 | 1450 | 1380 | 1480 | 1480 | 1480 |
| Mz/Mw | 1,67 | 1.72 | 1.75 | 1.69 | 1.74 | 1.74 | 1.74 |
| $\eta$ (100°C) (Pa·s) | 3108 | 3422 | 2945 | 3124 | 2995 | 2990 | 3005 |
| $\eta$ (60°C) (Pa·s) | 3541 | 4059 | 3246 | 3360 | 3450 | 3380 | 3450 |
| Viscosity ratio $\eta$ (60°C) / $\eta$ (100°C) | 1.14 | 1.19 | 1.1 | 1.08 | 1.15 | 1.17 | 1.15 |
| Viscosity ratio $\eta$ (100°C) / $\eta$ (60°C) | 0.88 | 0.84 | 0.91 | 0.93 | 0.87 | 0.86 | 0.87 |
| Mooney viscosity (ML1+4, 100°C) | 33 | 53 | 35 | 33 | 34 | 34 | 34 |
| Property Evaluation of Acrylic Rubber | | | | | | | |
| Processability Test (50°C) | | | | | | | |
| BIT (index) | 21 | 22 | 22 | 23 | 22 | 100 | 95 |
| Water Resistance Test (85°C × 100hr) Volume change rate (index) | 26 | 30 | 20 | 21 | 35 | 100 | 56 |
| Normal Physical Property Evaluation | | | | | | | |
| Breaking strength | ◎ | ◎ | ◎ | ◎ | ◎ | ◎ | ◎ |
| 100% tensile stress | ◎ | ◎ | ◎ | ◎ | ◎ | ◎ | ◎ |
| Breaking elongation | ◎ | ◎ | ◎ | ◎ | ◎ | ◎ | ◎ |
| ※ In the table, Lx ↓ indicates that the emulsion polymerization liquid was added to the coagulant liquid, and Coa ↓ indicates that the coagulant liquid was added to the emulsion polymerization liquid. | | | | | | | |

From Table 2, it can be understood that the acrylic rubbers (A) to (E), comprising a polymer composition of: 70 to 99.9% by weight of a bonding unit derived from at least one (meth) acrylic acid ester selected from the group consisting of (meth) acrylic acid alkyl ester and (meth) acrylic acid alkoxyalkyl ester; 0.1 to 10% by weight of a bonding unit derived from a monomer containing a reactive group; and 0 to 20% by weight of a bonding unit derived from other monomer, wherein an ash content is 0.15% by weight or less, a total amount of sodium and sulfur in the ash is 60% by weight or more, a ratio of sodium to sulfur ([Na] / [S]) by weight ratio is in the range of 0.5 to 2.5, a ratio of a Z-average molecular weight (Mz) to a weight average molecular weight (Mw) is 1.3 or more, and a weight average molecular weight (Mw) is in the range of 1,000,000 to 5,000,000, are remarkably excellent in processability and water resistance while maintaining excellent normal physical properties including breaking strength (Examples 1 to 5).

Further, from Table 2, it can be understood that the acrylic rubbers (A) to (G) produced under the conditions of Examples, Comparative Examples, and Reference Examples of the present application are all excellent in the normal physical properties including the breaking strength, since the weight average molecular weight (Mw) of absolute molecular weights measured by GPC-MALS exceeds 1,000,000, and the ratio (Mz / Mw) of the Z-average molecular weight (Mz) and the weight average molecular weight (Mw) of the absolute molecular weight distribution with an emphasis on the high molecular weight region measured by GPC-MALS exceeds 1.3 by far. (Examples 1 to 5, Comparative Example 1 and Reference Example 1).

Further, from Table 2, it can be understood that the ash content does not decrease and the water resistance is not sufficient, in the case that the coagulant liquid is added to the emulsion polymerization liquid to generate hydrous crumbs in the coagulation reaction, even if the washing step involves washing 4 times with water, washing once with acid, and washing with pure water once (Comparative Example 1). On the other hand, in the coagulation reaction, in the case that an emulsion polymerization liquid is added to a high-concentration coagulant liquid being vigorously stirred to generate hydrous crumbs, the ash content is reduced so that the water resistance is improved only by washing with hot water twice (Reference Example 1).

Further, looking at the relationship between the amount of sodium (Na) and the amount of sulfur (S) in the ash in Table 2, it can be found out that, by performing the coagulation and the washing by the method of Reference Example 1, even though the total amount (Na+S) of sodium (Na) and sulfur (S) has not changed, the amount of sodium (Na) has decreased, so that the Na / S ratio has decreased, as compared with the Comparative Example 1. This is considered to be because, the coagulant (sodium sulfate: $Na_2SO_4$: Na ratio is large) used is mostly removed by performing the coagulation and washing method of Reference Example 1, but sodium (Na) derived from the emulsifier (sodium lauryl sulfate: $NaC_{12}H_{25}SO_4$) and sulfur (S) is contained in the hydrous crumbs so that they cannot be sufficiently removed by washing.

Further, from Table 2, it can be understood that the method of Reference Example 1 can improve the water resistance, but hardly improves the processability.

On the other hand, it can be understood that the acrylic rubber, in which the ash content is 0.1% by weight or less and the ratio of sodium to sulfur is focused in a specific range, can be obtained by performing the coagulation reaction on them, washing them twice with hot water, and then dehydrating and drying them with a screw-type extruder in the same manner as in Reference Example 1, so that the water resistance is remarkably improved while maintaining the strength properties (Examples 1 to 5). Further, it can be understood that the amount of gel insoluble in methyl ethyl ketone, which was 60% by weight or more, is almost removed by dehydrating and drying with the screw-type extruder, so that the processability of the acrylic rubber is improved (comparison of Examples 1 to 5 and Comparative Example 1 with Reference Example 1).

[Example 6]

Hydrous crumbs (hydrous crumbs temperature 65°C) emulsion-polymerized, coagulated, and washed in the same manner as in Example 1 are supplied to the screw-type extruder having a substantially rectangular die, and dehydrated and dried under the same conditions as in Example 1, and a sheet-shaped dry rubber having a width of 300 mm and a thickness of 10 mm was extruded. Next, the sheet-shaped dry rubber was cooled at a cooling rate of 200°C/hr to obtain a sheet-shaped acrylic rubber (H) using a transport-type cooling device directly connected to the screw-type extruder, and then cooled to 50°C. Thereafter, it was cut with a cutter and laminated so as to have 20 parts (20 kg) before the temperature became 40°C or lower, thereby to obtain a bale-shaped acrylic rubber (H).

When reactive group content, ash content, ash component content, specific gravity, amount of gel insoluble in methyl ethyl ketone, pH, glass transition temperature(Tg), water content, molecular weight, molecular weight distribution, complex viscosity, complex viscosity ratio and Mooney viscosity (ML1+4,100°C) of the obtained sheet-shaped acrylic rubber (H) and bale-shaped acrylic rubber (H) were measured, the measured values of the sheet-shaped acrylic rubber and those of the bale-shaped acrylic rubber were the same, and were the same as those of the corresponding acrylic rubber (A).

When the processability, water resistance and normal physical properties of the obtained sheet-shaped acrylic rubber (H) and bale-shaped acrylic rubber (H) were evaluated, the processability was "20", the water resistance was "25", and the breaking strength was "◎", 100% tensile stress was "◎" and elongation at break was "◎", which were excellent in all properties, and also excellent in workability and storage stability.

[EXPLANATION OF REFERENCE NUMERALS]

1 Acrylic Rubber Production System
3 Coagulation Device
4 Washing Device
5 Screw-Type Extruder

**Claims**

1. An acrylic rubber, comprising a polymer composition of:

70 to 99.9% by weight of a bonding unit derived from at least one (meth) acrylic acid ester selected from the group consisting of (meth) acrylic acid alkyl ester and (meth) acrylic acid alkoxyalkyl ester;

0.1 to 10% by weight of a bonding unit derived from a monomer containing a reactive group; and

0 to 20% by weight of a bonding unit derived from other monomer, wherein

an ash content is 0.15% by weight or less,

a total amount of sodium and sulfur in the ash is 60% by weight or more with respect to the total ash content,

a ratio of sodium to sulfur ([Na] / [S]) by weight ratio is in the range of 0.5 to 2.5,

a ratio of a Z-average molecular weight ($Mz$) to a weight average molecular weight ($Mw$) is 1.3 or more, and

a weight average molecular weight ($Mw$) is in the range of 1,000,000 to 5,000,000.

2. The acrylic rubber according to claim 1, wherein a ratio of sodium to sulfur in the ash ([Na] / [S]) is in the range of 0.7 to 1.

3. The acrylic rubber according to claim 1 or 2, wherein an amount of gel insoluble in methyl ethyl ketone in the rubber is 50% by weight or less.

4. The acrylic rubber according to any one of claims 1 to 3, wherein an amount of gel insoluble in methyl ethyl ketone in the rubber is 10% by weight or less.

5. The acrylic rubber according to any one of claims 1 to 4, wherein pH is 6 or less.

6. The acrylic rubber according to any one of claims 1 to 5, wherein a ratio ($[\eta]$ 100°C / $[\eta]$ 60°C) of the complex viscosity ($[\eta]$ 100°C) at 100°C to the complex viscosity ($[\eta]$ 60°C) at 60°C is 0.8 or more.

7. The acrylic rubber according to any one of claims 1 to 6, wherein the acrylic rubber is in the form of a sheet or a bale.

8. The acrylic rubber according to any one of claims 1 to 7, wherein a specific gravity is 0.8 or more.

9. A method for producing an acrylic rubber, the method comprising:

an emulsion polymerization process to emulsify a monomer component comprising at least one (meth) acrylic acid ester selected from the group consisting of (meth) acrylic acid alkyl ester and (meth) acrylic acid alkoxyalkyl ester, a monomer containing a reactive group, and, if necessary, a copolymerizable other monomer, with water and a sulfuric acid emulsifier, and to emulsion-polymerize the emulsified monomer to 90% by weight or more of a polymerization conversion rate in the presence of a polymerization catalyst to obtain an emulsion polymerization liquid;

a coagulation process to add the obtained emulsion polymerization liquid to a sodium salt aqueous solution being stirred at a peripheral speed of 0.5 m/s or higher to generate hydrous crumbs;

a washing process to wash the generated hydrous crumbs with hot water; and

a dehydration/drying process, using a screw-type extruder provided with a dehydration barrel having a dehydration slit, a drying barrel under reduced pressure, and a die at a tip thereof, to dehydrate the washed hydrous crumbs to a water content of 1 to 40% by weight by the dehydration barrel, thereafter to dry the dehydrated hydrous crumbs to a water content of less than 1% by weight by the drying barrel, and to extrude a dry rubber from the die.

10. The method for producing an acrylic rubber according to claim 9, wherein a peripheral speed is 1.5 m/s or higher.

11. The method for producing an acrylic rubber according to claim 9 or 10, wherein the sodium salt aqueous solution is a sodium sulfate aqueous solution.

12. The method for producing an acrylic rubber according to any one of claims 9 to 11, wherein a temperature of the hydrous crumbs supplied to the screw-type extruder is 40°C or higher.

13. A rubber composition containing a rubber component containing the acrylic rubber according to any one of claims 1 to 8, a reinforcing agent and a cross-linking agent.

14. A rubber cross-linking product obtained by cross-linking the rubber composition according to claim 13.

FIG.1

FIG.2

**INTERNATIONAL SEARCH REPORT**

| International application No. |
| --- |
| PCT/JP2020/022318 |

**A. CLASSIFICATION OF SUBJECT MATTER**
Int.Cl. C08F6/22(2006.01)i, C08F220/18(2006.01)i, C08L33/04(2006.01)i, C08K3/013(2018.01)i
FI: C08F220/18, C08K3/013, C08L33/04, C08F6/22
According to International Patent Classification (IPC) or to both national classification and IPC

**B. FIELDS SEARCHED**

Minimum documentation searched (classification system followed by classification symbols)
Int.Cl. C08F6/22, C08F220/18, C08L33/04, C08K3/013

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2018/079783 A1 (ZEON CORPORATION) 03.05.2018 (2018-05-03), claims, paragraphs [0065]-[0074], examples 1, 15, 16 | 1-2, 5-6, 13-14 |
| Y | | 1-14 |
| Y | JP 2004-143323 A (ZEON CORPORATION) 20.05.2004 (2004-05-20), paragraph [0013], example 1 | 1-14 |
| Y | JP 2004-131654 A (ZEON CORPORATION) 30.04.2004 (2004-04-30), paragraphs [0008], [0009], examples | 3-4, 7-8, 9-12 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31.07.2020 | 11.08.2020 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| International application No. |
| --- |
| PCT/JP2020/022318 |

```
WO 2018/079783 A1   03.05.2018    TW 201817800 A

JP 2004-143323 A    20.05.2004    (Family: none)

JP 2004-131654 A    30.04.2004    (Family: none)
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018079783 A